# EUROPÄISCHE PATENTSCHRIFT

(11) **EP 1 528 374 B1**
(45) Veröffentlichungstag und Bekanntmachung des Hinweises auf die Patenterteilung: **19.01.2011**
(21) Anmeldenummer: 04023641.6
(22) Anmeldetag: 05.10.2004
(51) Int. Cl.: G01F 1/84

(54) **Coriolis-Massendurchflussmessgerät**
Coriolis mass flowmeter
Débitmètre massique de Coriolis

(30) Priorität: 31.10.2003 DE 10351311
(43) Veröffentlichungstag der Anmeldung: 04.05.2005
(73) Patentinhaber: ABB AG, 68309 Mannheim (DE)
(72) Erfinder: Gebhardt, Jörg, Dr.-Ing., 55130 Mainz (DE); Kassubek, Frank, Dr., 79618 Rheinfelden (DE); Friedrichs, Rene, Dipl.-Phys., 68526 Ladenburg (DE); Waldi, Wolfgang, Dipl.-Ing., 69226 Nussloch (DE); Keller, Steffen, Dr.-Ing., 76133 Karlsruhe (DE); Herwig, Jörg, Dipl.-Ing., 37139 Adelebsen (DE); Deppe, Lothar, 37081 Göttingen (DE); Hug, Kuno, 69118 Heidelberg (DE); Gasch, Armin, Dr., 67346 Speyer (DE)

(56) Entgegenhaltungen:
- EP-A- 0 831 306
- WO-A-00/12970
- DE-A- 10 220 827
- DE-A- 10 235 322
- JP-A- 2000 055 710
- US-A1- 2002 117 010
- US-A1- 2002 152 819
- US-B1- 6 301 974
- US-B1- 6 314 820
- US-B1- 6 363 794

## Beschreibung

Die Erfindung betrifft ein Coriolis-Massendurchflussmessgerät (CMD) mit einem in gekoppelten Biege- und Torsionsmoden schwingenden Messrohr, gemäß dem Oberbegriff des Anspruchs 1.

CMD regen das vom Fluid durchströmte Messrohr zu einer periodischen Bewegung - typischerweise zu Biegeschwingungen - an und messen die Kraftwirkung des Fluides auf die Rohrwand an mindestens zwei Stellen. Aus der Phasendifferenz der Messsignale an den Messstellen kann der Massendurchfluss ermittelt werden.

Die Kraftwirkung des Fluides auf die Rohrwand aufgrund der Strömung (dies ist der Coriolis-Effekt) ist aber verglichen mit anderen auftretenden Kräften sehr klein. Um den Messeffekt von Untergrund und Störungen unterscheiden zu können, bestehen daher hohe Anforderungen an das Gerät bezüglich Symmetrie des Aufbaus etc. Insbesondere aber muss der CMD schwingungstechnisch möglichst vollständig von seiner Umgebung (insbesondere der Rohrleitung, in der er eingebaut ist, und deren Eigenschaften man nicht beeinflussen kann) abgekoppelt sein. Eine solche Entkopplung wird auch als "Balancierung" des CMD bezeichnet.

Im Stand der Technik wird eine Balancierung vielfach zu erreichen versucht, indem Doppelrohrkonstruktionen und/oder gebogene Messrohre verwendet werden. Diese können eine Balancierung über einen weiten Dichtebereich des Fluides erreichen. Prozesstechnisch sind einrohrige, ungebogene Messrohre allerdings vorzuziehen. Bei diesen gibt es drei typische Ansätze (vgl. für eine Übersicht den Artikel "Einrohrtechnik bei Coriolis-Massemessern - eine Standortbestimmung", W. Drahm, atp 42, 7 (2000) S.20):
- fester symmetrischer Einbau
   Durch spezielle Einbauvorschriften soll hier sichergestellt werden, dass der CMD wohldefiniert an die Umgebung koppelt. Die Geräte selbst haben eine grosse Masse. Nachteile sind erhöhte Einbaukosten, schwere Befestigungen und eine grosse Empfindlichkeit des Gerätes gegen äussere Einflüsse (z. B. geringe Nullpunktsstabilität).
- Biege-Gegenschwinger
   Die Vibration des Messrohres wird durch Anbringen eines Biege-Gegenschwingers kompensiert. Dieser schwingt gegenphasig zum Messrohr und eliminiert im Idealfall die Oszillationsbewegung des Schwerpunktes. Dann koppeln keine Kräfte am Rand aus. Eine solche Kompensation funktioniert im Allgemeinen nur für eine Dichte des Fluides, bei anderen Dichten stimmen die Massenverhältnisse von Messrohr und Gegenschwinger nicht mehr und die Kopplung an die Umgebung steigt stark an. Dann sinkt auch die Messgenauigkeit.
- Torsionsgegenschwinger
   Anstelle eines Biege-Gegenschwingers wird durch exzentrisches Anbringen von Massen die Biegeeigenschwingung an eine Torsionsschwingung des Rohres gekoppelt. Es wurde vorgeschlagen, dies durch das Anbringen einer Anzahl von Auslegermassen am Messrohr zu erreichen, deren Schwerpunkte in einer gemeinsamen, senkrecht zur Biegeschwingungsebene durch die Längsachse des Messrohres verlaufenden Ebene, jedoch im allgemeinen nicht auf dieser Längsachse liegen. Eine alternative Möglichkeit ist das Anbringen eines steifen exzentrischen Troges, wie in der US 2002/0117010A1 gezeigt. Da beide Schwingungsmoden (die Biege- und die Torsionsschwingungsmode) in ähnlicher Weise von der Fluidmasse beeinflusst werden, zeigt sich, dass man Randkräfte, d.h. Biege- und Torsionskräfte - über einen großen Dichtebereich kompensieren kann. Der balancierte Teil des Messrohres wird im folgenden auch als Messstrecke bezeichnet. Die Messdaten sollen nur innerhalb der solcherart balancierten Messstrecke aufgenommen werden.

Die EP 1 502 085 A zeigt einen Messwandler vom Vibrationstyp, mit einem Messrohr sowie einem Einlass - und Auslassrohrstück. Der Messwandler umfasst einen am Einlass - und am Auslassende fixierten, torsionselastisch ausgeführten Gegenschwinger. Der Gegenschwinger kann als Rohr ausgeführt sein und Nuten aufweisen, mittels derer die Massenverteilung des Gegenschwingerrohres eingestellt werden kann.

Die JP 2000 055710 A zeigt ein Coriolis - Durchflussmessgerät mit einem Kompensations - Vibrator, der parallel zum Messrohr und einlass - und auslassseitig an diesem fixiert ist. Dieser ist als steifes Rohr mit homogener Wandstärke aufgebaut und als Ganzes in sich tordierbar.

Die Balancierung wie vorgeschlagen erkauft man allerdings damit, dass aufgrund der Torsionsschwingung symmetrische Drehmomente (Torsionsmomente) entlang der Rohrachse an den einlass- und auslassseitigen Enden des Messrohres angreifen. Symmetrisch heißt dabei, dass die einlass- und auslassseitigen Torsionsmomente betragsmäßig gleich, aber entweder gleichsinnig oder gegensinnig orientiert sind. Über diese axialen Torsionsmomente findet weiterhin eine unerwünschte schwingungstechnische Kopplung an die Umgebung des CMD statt.

Es ist daher die Aufgabe der vorliegenden Erfindung, ein gattungsgemäßes CMD so weiterzuentwickeln, dass auch axiale Torsionsmomente kompensiert sind.

Die Aufgabe wird gelöst durch die kennzeichnenden Merkmale des Anspruchs 1.

Erfindungsgemäß ist ein bezüglich einer Rotationssymmetrieachse drehsymmetrisch ausgebildetes, in Torsionsschwingungen gleicher Frequenz, aber entgegengesetzter Phasenlage zu den Torsionsschwingungsmoden des Messrohres versetzbares Anbauteil mechanisch mit dem Messrohr verbunden. Die Rotationssymmetrieachse des Anbauteils verläuft parallel zu der durch die Mittelpunkte der Messstreckeneinlass- und Messstreckenauslassquerschnittsflächen festgelegten Geraden, die im folgenden kurz als Zentralachse bezeichnet wird, oder fällt mit dieser zusammen. Bei einem vollständig geraden Messrohr fällt die Zentralachse mit der Messrohrmittellinie und der Rotationssymmetrieachse des Messrohres zusammen.

Drehsymmetrisch bedeutet hier symmetrisch im Sinne einer sogenannten n-zähligen Drehsymmetrie. N ist dabei eine natürliche Zahl. Ein Körper weist dann eine n-zählige Drehsymmetrie auf, wenn bei Drehung um die Rotationssymmetrieachse um einen Winkel von 360°/n der Körper in sich selbst abgebildet wird. Beispielsweise besitzt ein längserstreckter Quader mit quadratischen Grundflächen eine 4-zählige Drehsymmetrie bezüglich einer parallel zur Längserstreckungsrichtung verlaufenden Zentralachse. Denn bei Drehung um jeweils 90° um diese Rotationssymmetrieachse wird der Quader in sich abgebildet. Ein längserstreckter Quader mit rechteckigen Stimflächen hat eine 2-zählige Drehsymmetrie. Ein Voll- oder Hohlzylinder, beispielsweise ein Messrohr, mit homogener Massenverteilung hätte als Extremfall einer n-zähligen Drehsymmetrie eine "unendlich-zählige" Drehsymmetrie, da jede Drehung um jeden beliebigen Winkel den Hohl- oder Vollzylinder in sich selbst abbildet. In diesem Fall spricht man auch von Rotationssymmetrie.

Das Anbauteil kann spiegelsymmetrisch bezüglich einer senkrecht zur Rotationssymmetrieachse orientierten und die Zentralachse in der Mitte der Messstrecke schneidenden Symmetrieebene sein. Spiegelsymmetrisch bedeutet, dass das Anbauteil bei Spiegelung an der Symmetrieebene in sich selbst übergeht.

Weiterhin sehr vorteilhaft ist eine Ausführungsform, bei der wenigstens ein weiteres Kompensationsteil zur Kompensation von Biege- und/oder Torsionskräften an dem Messrohr angebracht ist. Das können, wie oben beschrieben, exzentrische Massen, ein exzentrischer, steifer Trog oder andere an sich bekannte Kompensationsteile sein, mittels derer, wie oben beschrieben, die Biege- und Torsionskräfte des Messrohres im Bereich der Messstrecke kompensiert sind.

Der Teil des Messrohres, der durch das wenigstens eine Kompensationsteil in Bezug auf Biege- und/oder Torsionskräfte kompensiert ist, und der Teil, der durch das Anbauteil in Bezug auf das Torsionsmoment kompensiert ist, können deckungsgleich sein, oder einer der beiden Teile umfasst den anderen. Der jeweils größere der beiden Teile definiert die Messstrecke. Die Messstrecke ist derjenige Teil des Messrohres, in dem dieses balanciert ist. Sie kann genauso lang sein wie das Messrohr selbst. Sie kann aber auch kürzer sein als das Messrohr, also nur einen Teilabschnitt des Messrohres umfassen.

In vorteilhafter Ausgestaltung ist das Anbauteil einlass- und auslassseitig mit dem Messrohr verbunden. Das Anbauteil kann an den einlass- und auslassseitigen Enden der Messstrecke oder innerhalb der Messstrecke mit dem Messrohr verbunden sein.

An den einlass- und auslassseitigen Messstreckenenden, können einlass- und auslassseitige Rohrverlängerungen angebracht sein, an denen dann die Flansche zur Einbindung des CMD in eine Prozessrohrleitung angebracht sind. Das Messrohr setzt sich dann aus der Messstrecke und den Rohrverlängerungen zusammen.

Die oben beschriebene Aufteilung des Messrohres in Messstrecke und Rohrverlängerungen ist dabei funktional zu verstehen. Gegenständlich gesehen, kann die Messtrecke mit den Rohrverlängerungen ein einziges Bauteil sein, oder es kann aus einer Mehrzahl von Teilstücken zusammengesetzt sein.

Der Vorteil der erfindungsgemäßen Anordnung liegt nun darin, dass die Torsionsmomente des Messrohres und des Anbauteils an den Verbindungsstellen zwischen dem Messrohr und dem Anbauteil genau kompensiert sind, wenn die Güte der Messrohrtorsionsschwingung und die Güte der Torsionsschwingung des Anbauteils identisch sind. Falls sich die Güten unterscheiden, so sind die Torsionsmomente des Messrohres und des Anbauteils an den Verbindungsstellen zwischen dem Messrohr und dem Anbauteil nahezu genau kompensiert.

Ein erfindungsgemäßes CMD ist somit nach außen hin, in den Bereichen außerhalb der Messstrecke, bezüglich der Torsionsmomente balanciert.

Wenn ein erfindungsgemäßes CMD hinsichtlich des Messrohres aufgebaut ist, wie bereits früher vorgeschlagen und oben unter dem Untertitel "Torsionsgegenschwinger" beschrieben, so kann ein an den Endzonen der Messstrecke hinsichtlich aller auftretenden Biege- bzw. Torsionskräfte und -momente sehr gut balanciertes CMD aufgebaut werden.

Das Anbauteil kann dabei das Messrohr im Bereich der Messstrecke umhüllen, es kann aber auch außerhalb des Messrohres angeordnet sein. Wesentlich ist die Gleichheit der Torsionsschwingungsfrequenzen von Messrohr und Anbauteil.

Wenn das Anbauteil das Messrohr umhüllt, so ist, mit anderen Worten, im Wesentlichen eine Art inneres Traggehäuse an dem Messrohr des CMD angebracht, dessen Schwingungsmoden so abgestimmt sind, dass es eine Torsionsmode derselben Frequenz, aber entgegengesetzter Phasenlage wie die Torsionsmode des Messrohres besitzt. Die Rotationssymmetrieachse des Anbauteils fällt dann mit der Zentralachse des Messrohres zusammen. Das Innengehäuse und das eigentliche Messrohr schwingen gegenphasig, und die Torsionsmomente um die Rohrachse gleichen sich aus. Die wesentliche Bedingung, die für einen Ausgleich erforderlich ist, ist die Gleichheit der Frequenzen. Die Verbindung zwischen Messrohr und Anbauteil ist beispielsweise so realisierbar, dass das Anbauteil einlass- und auslassseitig am Messrohr angeschweißt ist.

Wenn das Anbauteil das Messrohr nicht umhüllt, so verläuft die Rotationsschwingungsachse des Anbauteils parallel in einem Abstand zur Zentralachse des Messrohres. Eine starre Verbindung zwischen dem Messrohr und dem Anbauteil kann dann beispielsweise durch Anschweißen je einer starren Platte einlass- und auslassseitig an dem Messrohr und Anschweißen des Anbauteils an den Platten realisiert sein.

Das Messrohr kann bei einem erfindungsgemäßen CMD auch in nahezu beliebiger Form gebogen sein. Es könnte beispielsweise U-förmig, V-förmig, oder S-förmig gebogen sein. Auch solcherart beliebig gebogene Messrohre koppeln, wenn sie zu gekoppelten Biege- und Torsionsschwingungen angeregt sind, an ihren Enden Torsionsmomente aus.

Bei einem gebogenen Messrohr fällt die Zentralachse nicht mehr auf der ganzen Messrohrlänge mit der Messrohrmittellinie und der Rotationssymmetrieachse des Messrohres zusammen. Auch bei einem gebogenen Messrohr verlaufen sowohl die Zentralachse als auch die Messrohrrotationssymmetrieachse durch die Mittelpunkte der Rohreinlass- und Rohrauslassquerschnittsflächen.

Das Anbauteil kann dabei wenigstens einen ersten, einlassseitigen, einen zweiten, auslassseitigen und einen dritten, mittleren Teilabschnitt umfassen, wobei jeder Teilabschnitt bezüglich der Rotationssymmetrieachse des Anbauteils drehsymmetrisch ausgebildet ist. Die Teilabschnitte sind vorteilhafterweise so ausgeführt, dass die einlassund auslassseitigen Teilabschnitte im wesentlichen als Drehfedern und der mittlere Teilabschnitt im wesentlichen als träge Masse wirken.

Die Funktionsweise der Erfindung kann man sich durch Analogiebetrachtung mit einem System gekoppelter Feder-Masse-Schwinger veranschaulichen. Das Messrohr entspricht in einer solchen Analogiebetrachtung einer Masse, die über eine Feder an die Flansche gekoppelt ist. Die Flansche sind in der Analogiebetrachtung eine Masse. Ebenso kann das Anbauteil als eine Masse (der mittlere Teilabschnitt) betrachtet werden, die über eine Feder (die ersten und zweiten Teilabschnitte) ebenfalls an die Flansche gekoppelt ist. Wird nun die das Messrohr darstellende Masse in Schwingungen versetzt, so werden durch die Federkopplung sowohl die die Flansche darstellende Masse als auch die das Anbauteil darstellende Masse zu Schwingungen angeregt. Es lässt sich durch Anwendung von dem Fachmann auf dem Gebiet der Mechanik bekannten Gesetzmäßigkeiten und Regeln zeigen, dass bei geeigneter Auslegung der die Schwingungseigenschaften des Anbauteils bestimmenden Parameter die Schwingungskopplung so erfolgt, dass das Anbauteil mit gleicher Frequenz und entgegengesetzter Phase zu dem Messrohr so schwingt, dass sich automatisch auch die Schwingungsamplituden von Anbauteil und Messrohr gegengleich so einstellen, dass die die Flansche darstellende Masse in Ruhe bleibt, also keine Kräfte und Momente auf die Flansche ausgeübt werden. Dann ist das System balanciert.

Die Schwingungseigenschaften des Anbauteils werden unter anderem von seinem Torsionsflächenmoment bezogen auf die Rotationssymmetrieachse bestimmt. Das Torsionsflächenmoment ist in der Mechanik eine bekannte Größe und beispielsweise beschrieben in Dubbel, Taschenbuch für den Maschinenbau, achtzehnte Auflage, Springer-Verlag Berlin, 1995, Seite C27 - C29. Das Torsionsflächenmoment von dünnwandigen Hohlkörpem mit konstanter Wanddicke ist, wie dort beispielsweise in Tab. 7 auf S. C29 angegeben, proportional zum Produkt aus dem Quadrat der von der Querschnittsmittellinie eingeschlossenen Fläche mit der Wanddicke, geteilt durch den Umfang der Querschnittsmittellinie. Der Verdrehungswinkel ist umgekehrt proportional zum Torsionsflächenmoment.

In einer vorteilhaften Ausführungsform der Erfindung ist daher das Torsionsflächenmoment des mittleren Teilabschnitts des Anbaukörpers größer als die Torsionsflächenmomente der einlass- und auslassseitigen Teilabschnitte. Bei einer solchen Ausführungsform ist dann sichergestellt, dass die einlass- und auslassseitigen Teilabschnitte als Torsionsfedern wirken und der mittlere Teilabschnitt als Masse, die in sich wenig tordiert.

Weiterhin ist bei dem erfindungsgemäßen CMD die Frequenz und Phasenlage der Torsionsschwingungsmode des Anbauteils durch das Verhältnis der Beträge der Torsionsflächenmomente des mittleren und der einlass- sowie auslassseitigen Teilabschnitte sowie durch die Lage der Übergänge zwischen dem mittleren und den einlass- bzw. auslassseitigen Teilabschnitten einstellbar. Die Übergänge zwischen dem mittleren und den einlass- bzw. auslassseitigen Teilabschnitten können dabei stufenförmig oder kontinuierlich erfolgen.

Wenn das Anbauteil das Messrohr nach Art eines Innengehäuses umhüllt, dann zeichnet sich ein solches erfindungsgemäßes Innengehäuse dadurch aus, dass es als ganzes nicht steif und nicht exzentrisch bezüglich der Zentralachse ist. Der mittlere Teilabschnitt kann zwar so ausgelegt werden, dass er steif ist, nicht aber die einlass- und auslassseitigen Teilabschnitte, welche ja wie bereits erwähnt die Funktion von Torsionsfedern ausüben.

Ferner müssen andere Schwingungsmoden, insbesondere Biegeschwingungsmoden, des Anbauteils - unabhängig davon, ob das Anbauteil das Messrohr umhüllt oder nicht - im Frequenzraum weit von der Anregungsfrequenz entfernt sein, um keine unerwünschten Kopplungen zu erzeugen, die den Balancierungseffekt verringern. Einstellbar sind Biegeschwingungsmoden beispielsweise über die Masse und Massenverteilung im Anbauteil. Insbesondere wenn das Anbauteil ein Hohlkörper ist, sind die Schwingungseigenschaften unter anderem durch den Betrag der Wandstärke einstellbar.

Eine sehr vorteilhafte Realisierung eines erfindungsgemäßen CMD sieht daher vor, dass die Teilabschnitte des Anbauteils Hohlkörper sind. Beispielsweise können die Teilabschnitte Hohlzylinder oder Hohlquader sein, dick- oder dünnwandig. Die Teilabschnitte sind untereinander dann durch nach anerkannten Regeln der Technik zu gestaltende Verbindungselemente, beispielsweise Platten, zu verbinden.

Bei der Wahl von Hohlzylindern als Teilabschnitte des Anbauteils weist das den mittleren Teilabschnitt bildende Zylinderrohrstück einen größeren Radius auf als die den ersten und zweiten Teilabschnitt bildenden. Die Frequenz und/oder Phasenlage des Anbauteils ist dann durch die Lage der Übergänge zwischen den mittleren und den einlass- bzw. auslassseitigen Zylinderrohrstücken und das Verhältnis des Radius des mittleren zu den Radien der einlass- bzw. auslassseitigen Zylinderrohrstücke einstellbar.

Ein erfindungsgemäßes Anbauteil kann in allgemeiner Weise auch so ausgestaltet sein, dass die einzelnen Teilabschnitte nicht an allen Stellen den gleichen Durchmesser und die gleiche Wandstärke haben, also beispielsweise auch konvex und/oder konkav geformte Oberflächenabschnitte umfassen. Es könnten auch die einzelnen Teilabschnitte wiederum aus Unterabschnitten zusammengesetzt und/oder zusammengesetzte Körper sein. Es ist allerdings darauf zu achten, dass die oben erfindungsgemäß beschriebenen Bedingungen hinsichtlich der Rotationssymmetrie des Anbauteils als Ganzes und der Torsionsschwingungseigenschaften des Anbauteils eingehalten sind.

Eine sehr vorteilhafte Ausgestaltung eines erfindungsgemäßen CMD ist dadurch gekennzeichnet, dass die Erregeranordnung an dem Anbauteil angebracht ist. Es können auch die Sensoren zur Schwingungserfassung an dem Anbauteil angebracht sein.

Eine weitere sehr vorteilhafte Ausgestaltungsform der Erfindung sieht vor, dass an dem Anbauteil Justierelemente, beispielsweise veränderliche Massen, angebracht sind, mit denen nachträglich eine Trimmung der Schwingungseigenschaften des Anbauteils durchgeführt werden kann.

Erfindungsgemäß ist weiterhin ein CMD, bei dem wenigstens zwei bezüglich der Zentralachse achssymmetrisch ausgebildete, in Torsionsschwingungen gleicher Frequenz aber entgegengesetzter Phasenlage zu den Torsionsschwingungsmoden des Messrohres versetzbare Anbauteile mechanisch mit dem Messrohr verbunden sind.

Vorteilhafterweise sind an der einlass - bzw. auslassseitigen Messrohrendzone je ein einlass- bzw. auslassseitiges Anbauteil in Form eines Kreisringes mittels radialer, längserstreckter Verbindungselemente an dem Messrohr angebracht. Die längserstreckten Verbindungselemente können Stäbe, Balken oder Rohre sein. Mit anderen Worten könnte man sagen, die Anbauteile sehen aus wie Speichenräder. Die Torsionsschwingungseigenschaften des einlass- bzw. auslassseitigen Anbauteils sind dann über die Dimensionierung der längserstreckten Verbindungselemente einstellbar.

Weitere vorteilhafte Ausgestaltungen und Verbesserungen der Erfindung und weitere Vorteile sind den weiteren Unteransprüchen zu entnehmen.

Anhand der Zeichnungen, in denen dreizehn Ausführungsbeispiele der Erfindung dargestellt sind, sollen die Erfindung sowie weitere vorteilhafte Ausgestaltungen und Verbesserungen der Erfindung sowie weitere Vorteile näher erläutert und beschrieben werden.

Es zeigen:
- Fig. 1: eine erste Ausführungsform der Erfindung, bei der das Anbauteil drei Rohrstücke umfasst,
- Fig. 2: eine zweite Ausführungsform der Erfindung, bei der das Anbauteil drei Hohlquader umfasst,
- Fig. 3: eine dritte Ausführungsform der Erfindung, bei der das Anbauteil ein achssymmetrischer Körper mit kontinuierlichen Übergängen zwischen Zonen unterschiedlichen Querschnitts ist,
- Fig. 4: eine vierte Ausführungsform der Erfindung, bei der das Anbauteil zwei durch einen Zylindermantel verbundene, speichenradförmige Ringkörper umfasst,
- Fig. 5: eine fünfte Ausführungsform der Erfindung, bei der das Anbauteil zwei verbundene Scheiben und schwere Massen in der Mitte umfasst,
- Fig. 6: eine sechste Ausführungsform, bei der zwei speichenradförmige Anbauteile an dem Messrohr angebracht sind,
- Fig. 7: eine siebte Ausführungsform, bei der das Anbauteil vier an senkrecht zur Messrohrachse verlaufenden Platten gehaltene Hohlkörper umfasst,
- Fig. 8: eine achte Ausführungsform, bei der das Anbauteil zwei an senkrecht zur Messrohrachse verlaufenden Platten gehaltene Hohlkörper umfasst,
- Fig. 9: ein vereinfachtes Feder-Masse-Modell zur Veranschaulichung der Funktionsweise,
- Fig. 10: eine neunte Ausführungsform, bei der zwei Paare längserstreckter Elemente als Anbauteile an dem Messrohr angebracht sind,
- Fig. 11: eine zehnte Ausführungsform, bei der an dem Messrohr neben dem Anbauteil noch ein weiteres Kompensationsteil angebracht ist,
- Fig. 12: eine elfte Ausführungsform, bei der das Messrohr S-förmig gebogen ist,
- Fig. 13: eine zwölfte Ausführungsform, bei der an dem Messrohr neben dem Anbauteil ebenfalls ein weiteres Kompensationsteil angebracht ist, und
- Fig. 14: eine dreizehnte Ausführungsform, bei der an dem Messrohr vier exzentrische Massen als weitere Kompensationsteile angebracht sind.

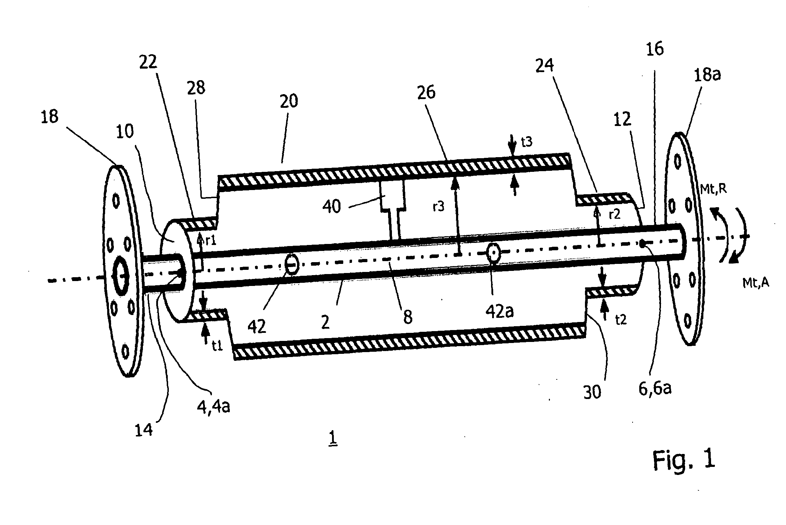

Fig. 1 zeigt ein Coriolis-Massendurchflussmessgerät 1 mit einem einzigen, geraden Messrohr 2. Das Messrohr 2 ist aus einem Stück gefertigt, aber funktional in eine einlass- und eine auslassseitige Rohrverlängerung 14, 16 und die dazwischenliegende Messstrecke, begrenzt von einer Messstreckeneinlassquerschnittsfläche 4 und einer Messstreckenauslassquerschnittsfläche 6, unterteilt. Durch deren Mittelpunkte 4a, 6a ist eine Zentralachse 8 des Messrohres 2 festgelegt. Die Zentralachse 8 fällt hier mit der Rotationssymmetrieachse des Messrohres 2 zusammen. An den Rohrverlängerungen14, 16 sind die Flansche 18, 18a zur Einbindung des Messgerätes 1 in ein Prozessrohrleitungssystem angebracht.

Mit dem Messrohr 2 ist ein Anbauteil 20 verbunden, welches das Messrohr 2 im Bereich der Messstrecke allseitig umgibt. Das Anbauteil 20 ist ein rotationssymmetrischer Hohlkörper, zusammengesetzt aus drei Hohlzylindern, die einen ersten, einlassseitigen, einen zweiten, auslassseitigen und einen dritten, mittleren Teilabschnitt 22, 24, 26 des Anbauteils 20 darstellen. Seine Rotationssymmetrieachse fällt mit der Zentralachse 8 des Messrohres 2 zusammen.

Die Verbindung zwischen dem mittleren Teilabschnitt 26 und dem einlass- bzw. auslassseitigen Teilabschnitten 22, 24 ist an Übergangsstellen 28, 30 durch verschweißte Platten hergestellt. Die Innenradien r₁, r₂ der einlass- bzw. auslassseitigen Teilabschnitte 22, 24 sind kleiner als der Innenradius r₃ des mittleren Teilabschnitts 26. Die Wandstärke t₃ des mittleren Teilabschnitts 26 ist dagegen größer als die Wandstärken t₁, t₂ der einlass- bzw. auslassseitigen Teilabschnitte 22, 24.

Das Messrohr 2 kann, wie im Stand der Technik üblich, aus Metall, beispielsweise Titan, bestehen. Auch das Anbauteil 20 kann aus Metall bestehen. Es ist an den einlass- bzw. auslassseitigen Enden 10, 12 der Messstrecke an das Messrohr angeschweißt.

An der Innenwand des mittleren Teilabschnittszylinders 26 ist eine Erregeranordnung 40 angebracht, welche mit dem Messrohr 2 in Wirkverbindung steht und durch die das Messrohr 2 in gekoppelte Biege/Torsionsschwingungen versetzbar ist. Die Erregeranordnung kann beispielsweise, wie früher bereits vorgeschlagen, eine oder mehrere geeignet angeordnete, von Wechselstrom durchflossenen Spulen mit darin beweglich angeordneten, mit dem Messrohr verbundenen Ankem umfassen. Entsprechend der Wechselstromfrequenz werden der oder die Anker periodisch aus der Spule herausgeschoben und wieder in die Spule hineingezogen, wodurch dann das Messrohr 2 zu Biegeschwingungen angeregt wird. Indem an dem Messrohr 2, wie früher bereits vorgeschlagen, exzentrische Massen an bestimmten Stellen angebracht sind oder das Messrohr selbst eine inhomogene Massenverteilung aufweist, koppelt an die Biegeschwingung eine Torsionsschwingung, so dass insgesamt durch die Erregeranordnung 40 das Messrohr 2 in eine gekoppelte Biege- und Torsionsschwingung versetzt ist. Es kann, wie ebenfalls bereits vorgeschlagen, auch das Messrohr 2 durch die Erregeranordnung 40 zunächst zu Torsionsschwingungen angeregt werden, an die dann mittels exzentrischen Auslegermassen an oder inhomogener Massenverteilung in dem Messrohr 2 Biegeschwingungen ankoppeln, so dass wiederum durch die Erregeranordnung 40 das Messrohr 2 zu gekoppelten Biege- und Torsionsschwingungen angeregt ist.

Die Torsionsschwingungsmode des Anbauteils 20 lässt sich hinsichtlich ihrer Frequenz und Phasenlage bezogen auf die Torsionsschwingungsmode des Messrohres 2 einstellen durch eine geeignete Festlegung folgender Parameter: des Verhältnisses von r₃ zu r₂ bzw. r₃ zu r₁, der Abstände der Übergangsstellen 28, 30 von den einlass- und auslassseitigen Enden der Messstrecke 10, 12 und der Wandstärken t₃, t₁, t₂. Bei entsprechend geeigneter Wahl hat die Torsionsschwingungsmode des Anbauteils 20 dann die gleiche Frequenz, aber entgegengesetzte Phase zur Torsionsschwingungsmode des Messrohres, so dass dann das an den einlass- bzw. auslassseitigen Enden der Messstrecke 10, 12 auftretende Torsionsmoment des Messrohres M_{tR} entgegengesetzt gleich dem dort auftretenden Torsionsmoment M_{tA} des Anbauteils 20 ist. Beide Torsionsmomente kompensieren sich, das Messgerät 1 ist an den einlass- bzw. auslassseitigen Enden der Messstrecke 10, 12 sehr gut balanciert.

Durch eine geeignete Wahl des Massenverhältnisses der Masse des Anbauteils zur Masse des Messrohres lässt sich darüber hinaus erreichen, dass andere Schwingungsmoden des Anbauteils 20, insbesondere Biegeschwingungsmoden, im Frequenzraum weit von der Anregungsfrequenz entfernt sind und somit keine unerwünschten Kopplungen zu den Torsionsschwingungsmoden des Anbauteils 20 erzeugen.

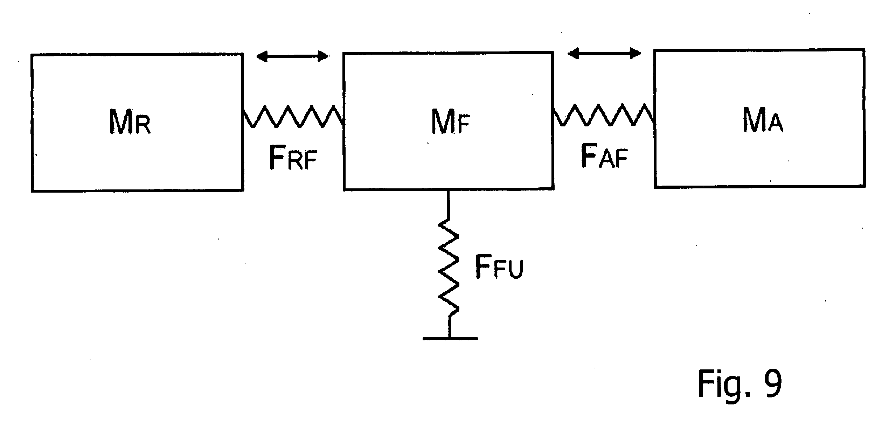

Fig. 9 erläutert die Funktionsweise der Torsionsmomentenkompensation an einem Analogiebeispiel mit linear gekoppelten Feder-Masse-Systemen. Das Messrohr entspricht in einer solchen Analogiebetrachtung einer Masse M_{R}, die über eine Feder F_{RF} an die Flansche gekoppelt ist. Die Flansche sind in der Analogiebetrachtung eine Masse M_{F}., die über eine weitere Feder F_{FU} an die Umgebung, also die Prozessrohrleitung, in die das Messgerät eingebaut ist, ankoppeln.

In vereinfachter Darstellung kann das Anbauteil als eine Masse M_{A} (nämlich der mittlere Teilabschnitt 20) betrachtet werden, die über eine Feder F_{AF} (nämlich die ersten und zweiten Teilabschnitte) ebenfalls an die Flansche gekoppelt ist. Wird nun die das Messrohr darstellende Masse M_{R} in Schwingungen versetzt, so werden durch die Federkopplung über F_{RF} und F_{AF} sowohl die die Flansche darstellende Masse M_{F} als auch die das Anbauteil darstellende Masse M_{A} zu Schwingungen angeregt. Es lässt sich durch Anwendung von dem Fachmann auf dem Gebiet der Mechanik bekannten Gesetzmäßigkeiten und Regeln zeigen, dass bei geeigneter Auslegung der die Schwingungseigenschaften des Anbauteils bestimmenden Parameter die Schwingungskopplung so erfolgt, dass das Anbauteil mit gleicher Frequenz und entgegengesetzter Phase zu dem Messrohr so schwingt, dass sich automatisch auch die Schwingungsamplituden von Anbauteil und Messrohr so einstellen, dass die die Flansche darstellende Masse M_{F} in Ruhe bleibt, also keine Kräfte und Momente auf die Flansche ausgeübt werden. Dann ist das System balanciert.

Am Messrohr 2 sind Sensoren 42, 42a zur Erfassung der Rohrschwingung angebracht.

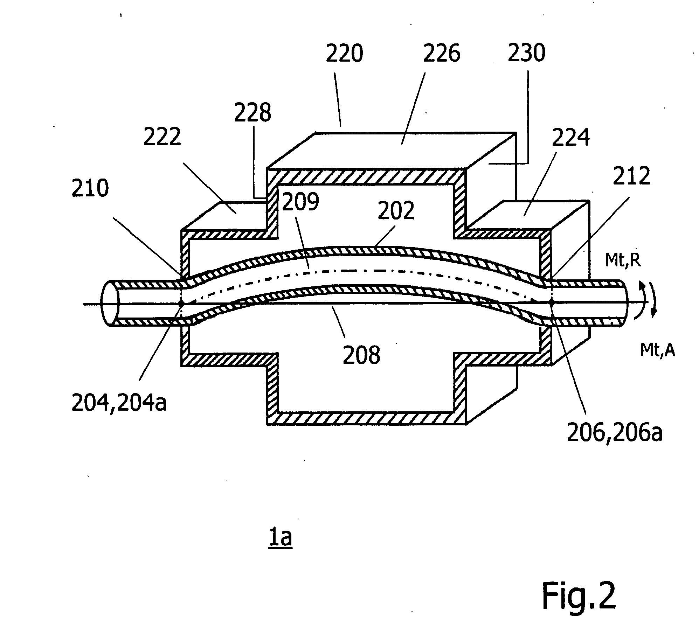

Fig. 2 zeigt eine alternative Ausführungsform eines erfindungsgemäßen Massendurchflussmessgerätes 1a. Gleiche, ähnliche oder ähnlich wirkende Elemente oder Baugruppen des Beispiels nach Fig. 2 tragen die um 200 erhöhten Bezugsziffern wie in Fig 1. Das Messrohr 202 ist zwischen den einlass- und auslassseitigen Enden 210, 212 der Messstrecke leicht gebogen. Ein leicht gebogenes Messrohr hat gegenüber einem vollständig geraden Messrohr den Vorteil; dass bei temperaturschwankungsbedingten Längenänderungen des Messrohres ein Längenausgleich zur Verringerung des Entstehens von Verspannungen im Messrohr möglich ist. Bei dem leicht gebogenen Messrohr 202 fallen die Messrohrmittellinie 209 und die durch die Mittelpunkte 204a, 206a der Rohreinlass- bzw. Rohrauslassquerschnittsflächen 204, 206 festgelegte Zentralachse 208 auseinander.

Mit dem Messrohr 202 ist ein Anbauteil 220 verbunden, so dass das Anbauteil 220 das Messrohr 202 im Bereich der Messstrecke allseitig umgibt. Das Anbauteil 220 ist ein 2-zählig drehsymmetrischer Hohlkörper, zusammengesetzt aus drei Hohlquadern, die einen ersten, einlassseitigen, einen zweiten, auslassseitigen und einen dritten, mittleren Teilabschnitt 222, 224, 226 des Anbauteils 220 darstellen. Seine Rotationssymmetrieachse fällt mit der Zentralachse 208 des Messrohres 202 zusammen.

Die Verbindung zwischen dem mittleren Teilabschnitt 226 und dem einlass- bzw. auslassseitigen Teilabschnitten 222, 224 ist an Übergangsstellen 228, 230 durch verschweißte Platten hergestellt.

Die Torsionsmomentenkompensation erfolgt im übrigen analog zu dem in Fig. 1 beschriebenen Bespiel. Die einlass- und auslassseitigen Teilabschnitte 222, 224 wirken als Torsionsfedern mit rechteckförmigem Querschnitt, und der mittlere Teilabschnitt 226 wirkt als Masse mit rechteckförmigem Querschnitt. Aber abgesehen von der Querschnittsform sind die unter Fig. 1 beschriebenen Zusammenhänge auf das Beispiel nach Fig. 2 analog übertragbar.

An der Innenwand des Anbauteils 220 ist wiederum eine Erregeranordnung angebracht, aber hier aus Gründen der Übersichtlichkeit nicht dargestellt. Ebenso sind an dem Messrohr Sensoren zur Aufnahme der Schwingungssignale angebracht, ebenfalls aus Gründen der Übersichtlichkeit wurde hier auf eine Darstellung verzichtet. Erregeranordnung und Sensoren sind auf ähnliche Weise angebracht wie in Fig. 1 gezeigt.

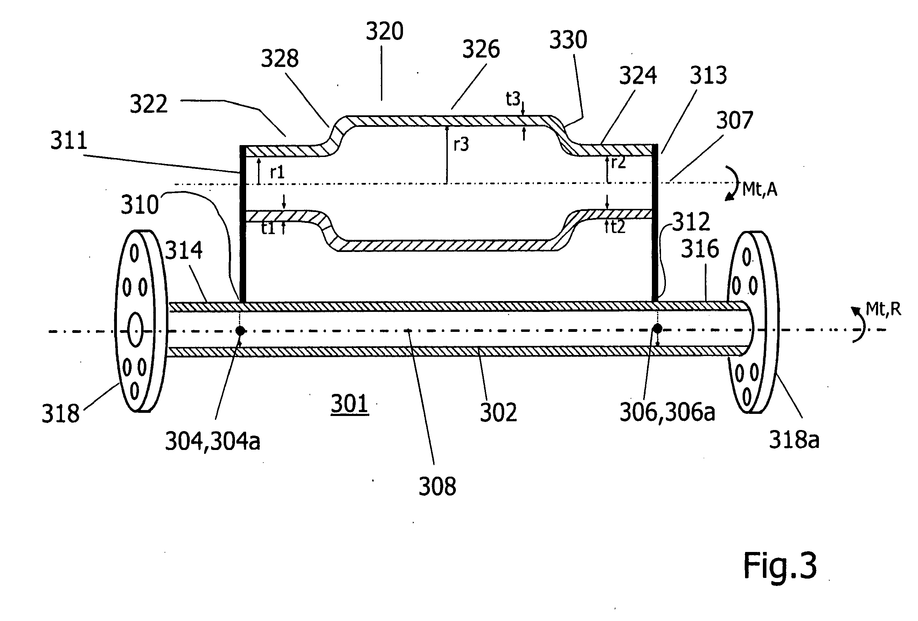

Fig. 3 zeigt eine weitere alternative Ausführungsform eines erfindungsgemäßen Massendurchflussmessgerätes 301. Gleiche, ähnliche oder ähnlich wirkende Elemente oder Baugruppen des Beispiels nach Fig. 3 tragen die um 300 erhöhten Bezugsziffern wie in Fig 1.

Fig. 3 zeigt ein Coriolis-Massendurchflussmessgerät 301 mit einem einzigen, geraden Messrohr 302. Das Messrohr 302 ist aus einem Stück gefertigt, aber funktional in eine einlass- und eine auslassseitige Rohrverlängerung 314, 316 und die dazwischenliegende Messstrecke, begrenzt von einer Messstreckeneinlassquerschnittsfläche 304 und einer Messstreckenauslassquerschnittsfläche 306, unterteilt. Durch deren Mittelpunkte 304a, 306a ist eine Zentralachse 308 des Messrohres 302 festgelegt. Die Zentralachse 308 fällt hier mit der Rotationssymmetrieachse des Messrohres 302 zusammen. An den Rohrverlängerungen 314, 316 sind die Flansche 318, 318a zur Einbindung des Messgerätes 301 in ein Prozessrohrleitungssystem angebracht.

Mit dem Messrohr 302 ist ein Anbauteil 320 verbunden, welches außerhalb des Messrohres 302 angeordnet ist. Das Anbauteil 320 ist ein rotationssymmetrischer Hohlkörper mit einem ersten, einlassseitigen, einem zweiten, auslassseitigen und einem dritten, mittleren Teilabschnitt 322, 324, 326. Seine Rotationssymmetrieachse 307 verläuft parallel zu der Zentralachse 308 des Messrohres 302, fällt aber nicht mit ihr zusammen sondern verläuft in einem Abstand zur Zentralachse 308 des Messrohres 302.

Das Anbauteil 320 besteht aus Metall und ist beispielsweise in Gusstechnik hergestellt. Zwischen dem mittleren Teilabschnitt 326 und den einlass- bzw. auslassseitigen Teilabschnitten 322, 328 sind Übergangsteile 328, 330 mit angeformt. Die Oberfläche des Anbauteils 320 zeigt einen kontinuierlichen Übergang zwischen den drei Teilabschnitten mit entsprechend konkav und konvex geformten Übergangsstellen.

Eine starre Verbindung zwischen dem Messrohr 302 und dem Anbauteil 320 ist durch Anschweißen je einer starren Platte 311, 313 einlass- und auslassseitig an dem Messrohr 302 und Anschweißen des Anbauteils 320 an den Platten 311, 313 realisiert.

Die typischen mittleren Innenradien r₁, r₂ der einlass- bzw. auslassseitigen Teilabschnitte 322, 324 sind kleiner als der typische mittlere Innenradius r₃ des mittleren Teilabschnitts 326. Die Wandstärke t₃ des mittleren Teilabschnitts 326 ist dagegen größer als die Wandstärken t₁, t₂ der einlass- bzw. auslassseitigen Teilabschnitte 322, 324.

Die Torsionsschwingungsmode des Anbauteils 320 lässt sich hinsichtlich ihrer Frequenz und Phasenlage bezogen auf die Torsionsschwingungsmode des Messrohres 302 einstellen durch eine geeignete Festlegung folgender Parameter: des Verhältnisses von r₃ zu r₂ bzw. r₃ zu r₁, der Abstände der Übergangsstellen 328, 330 von den einlass- und auslassseitigen Enden der Messstrecke 310, 312 bzw. der Verbindungsplatten 311, 313 und der Wandstärken t₃, t₁, t₂. Bei entsprechend geeigneter Wahl der Form hat die Torsionsschwingungsmode des Anbauteils 320 dann die gleiche Frequenz, aber entgegengesetzte Phase zur Torsionsschwingungsmode des Messrohres 302, so dass dann das an den einlass- bzw. auslassseitigen Enden der Messstrecke 310, 312 auftretende Torsionsmoment des Messrohres M_{tR} entgegengesetzt gleich dem dort auftretenden Torsionsmoment des Anbauteils 20, M_{tA} ist. Beide Torsionsmomente kompensieren sich, das Messgerät 301 ist an den einlass- bzw. auslassseitigen Enden der Messstrecke 310, 312 sehr gut balanciert.

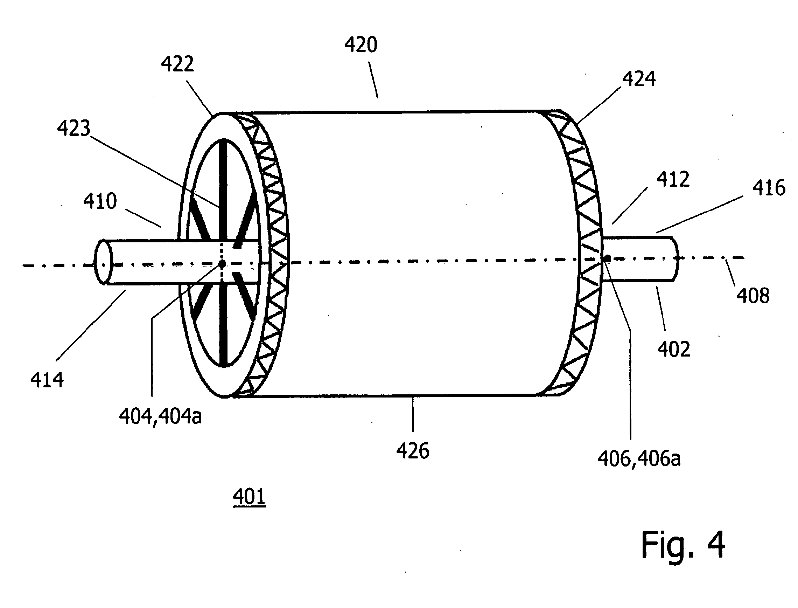

Fig. 4 zeigt eine weitere altemative Ausführungsform eines erfindungsgemäßen Massendurchflussmessgerätes 401. Gleiche, ähnliche oder ähnlich wirkende Elemente oder Baugruppen des Beispiels nach Fig. 4 tragen die um 400 erhöhten Bezugsziffern wie in Fig 1.

Fig. 4 zeigt ein Coriolis-Massendurchflussmessgerät 401 mit einem einzigen, geraden Messrohr 402. Das Messrohr 402 ist aus einem Stück gefertigt, aber funktional in eine einlass- und eine auslassseitige Rohrverlängerung 414, 416 und die dazwischenliegende Messstrecke, begrenzt von einer Messstreckeneinlassquerschnittsfläche 404 und einer Messstreckenauslassquerschnittsfläche 406, unterteilt. Durch deren Mittelpunkte 404a, 406a ist eine Zentralachse 408 des Messrohres 402 festgelegt. Die Zentralachse 408 fällt hier mit der Rotationssymmetrieachse des Messrohres 402 zusammen. An den Rohrverlängerungen 414, 416 sind die Flansche zur Einbindung des Messgerätes 401 in ein Prozessrohrleitungssystem anbringbar. Die Flansche sind in der Fig. 4 nicht dargestellt.

Mit dem Messrohr 402 ist ein Anbauteil 420 verbunden, so dass das Anbauteil 420 das Messrohr 402 im Bereich der Messstrecke allseitig umgibt. Das Anbauteil 420 ist ein rotationssymmetrischer Körper, zusammengesetzt aus drei Teilkörpern 422, 424, 426, die einen ersten, einlassseitigen, einen zweiten, auslassseitigen und einen dritten, mittleren Teilabschnitt des Anbauteils 420 darstellen. Seine Rotationssymmetrieachse fällt mit der Zentralachse 408 des Messrohres 402 zusammen.

Die einlassseitigen und auslassseitigen Teilabschnitte sind als je ein mittels radialer, längserstreckter Verbindungselemente 423 an dem Messrohr 402 angebrachter Kreisring 422 ausgebildet, und der mittlere Teilabschnitt ist hier ein steifer Hohlzylinder als Verbindungskörper 420. Insgesamt weisen die einlass- und auslassseitigen Teilabschnitte die Form eines Speichenrades auf, wobei die radialen längserstreckten Verbindungselemente die Speichen bilden. Durch geeignete Wahl der Dicke und Form der Speichen 423 lässt sich die Torsionseigenmode des Anbauteils 420 einstellen.

Die speichenradförmigen Teilabschnitte 422, 424 können beispielsweise durch Laserschneiden aus einer Vollscheibe hergestellt werden.

Hinsichtlich der Erregeranordnung und der Sensoren gilt das bei der Beschreibung der Fig. 2 gesagte entsprechend.

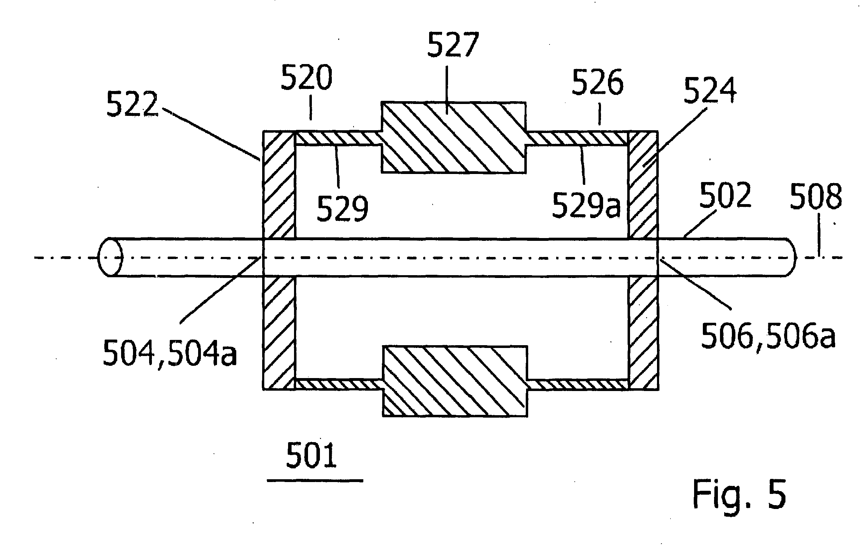

Fig. 5 zeigt eine weitere alternative Ausführungsform eines erfindungsgemäßen Massendurchflussmessgerätes 501. Gleiche, ähnliche oder ähnlich wirkende Elemente oder Baugruppen des Beispiels nach Fig. 5 tragen die um 500 erhöhten Bezugsziffern wie in Fig 1.

In dem Ausführungsbeispiel nach Fig. 5 sind die einlass- und auslassseitigen Teilabschnitte 522, 524 des Anbauteils 520 Scheiben. Der mittlere Teilabschnitt 526 ist als rotationssymmetrisch bezüglich der Zentralachse 508 des Messrohres 502 ausgebildeter Hohlzylinder ausgeführt. Dessen Wandstärke ist in seinem Mittelteil 527 aufgedickt, so dass dort eine im Vergleich zu den Randteilen 529, 529a höhere Masse und höhere Steifigkeit entstehen. Die Randteile 529, 529a sind dünnwandig ausgeführt, sie wirken als Torsionsfedern, während das Mittelteil 527 als Masse wirkt. Die Torsionsschwingungseigenschaften des Anbauteils 520 lassen sich hier durch Variation der Erstreckung der Randteile 529, 529 im Verhältnis zum Mittelteil 527 sowie durch den Betrag der Aufdickung des Mittelteils 527 und dessen Masse einstellen.

Hinsichtlich der Erregeranordnung und der Sensoren gilt das bei der Beschreibung der Fig. 2 gesagte entsprechend.

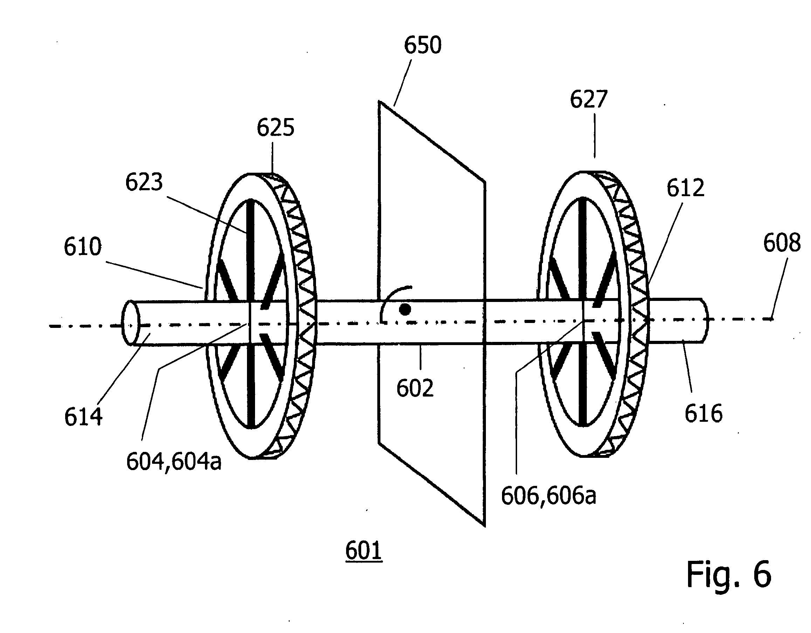

Fig. 6 zeigt eine weitere alternative Ausführungsform eines erfindungsgemäßen Massendurchflussmessgerätes 601. Gleiche, ähnliche oder ähnlich wirkende Elemente oder Baugruppen des Beispiels nach Fig. 6 tragen die um 600 erhöhten Bezugsziffern wie in Fig 1.

Fig. 6 zeigt ein Coriolis-Massendurchflussmessgerät 601 mit einem einzigen, geraden Messrohr 602. Das Messrohr 602 ist aus einem Stück gefertigt, aber funktional in eine einlass- und eine auslassseitige Rohrverlängerung 614, 616 und die dazwischenliegende Messstrecke, begrenzt von einer Messstreckeneinlassquerschnittsfläche 604 und einer Messstreckenauslassquerschnittsfläche 606, unterteilt. Durch deren Mittelpunkte 604a, 606a ist eine Zentralachse 608 des Messrohres 602 festgelegt. Die Zentralachse 608 fällt hier mit der Rotationssymmetrieachse des Messrohres 602 zusammen. An den Rohrverlängerungen 614, 616 sind die Flansche 618, 618a zur Einbindung des Messgerätes 601 in ein Prozessrohrleitungssystem anbringbar. Die Flansche sind in der Fig. 6 nicht dargestellt.

Mit dem Messrohr 602 sind an den Enden der Messstrecke ein einlass- und ein auslassseitiges Anbauteil 625, 627 verbunden, so dass jedes der Anbauteile 625, 627 das Messrohr 602 allseitig umgibt. Bezüglich der senkrecht zur Zentralachse 608 orientierten Spiegelsymmetrieebene 650 des Messrohres 602 sind die beiden Anbauteile 625, 627 spiegelsymmetrisch angeordnet. Jedes der beiden Anbauteile 625, 627 ist sechszählig drehsymmetrisch, dessen Rotationssymmetrieachse mit der Zentralachse 608 des Messrohres 602 zusammenfällt. Sie sind als je ein mittels sechs radialer, längserstreckter Verbindungselemente 623 an dem Messrohr 602 angebrachter Kreisring ausgebildet. Insgesamt weisen die einlass- und auslassseitigen Anbauteile die Form eines Speichenrades mit sechs Speichen auf, wobei die radialen längserstreckten Verbindungselemente die Speichen bilden. Durch geeignete Wahl der Dicke der Speichen 623 lassen sich die Torsionseigenmoden der Anbauteile 625, 627 einstellen und somit eine gute Balancierung des Messgerätes, wie oben beschrieben, erreichen.

Die speichenradförmigen Anbauteile 625, 627 können beispielsweise durch Laserschneiden aus einer Vollscheibe hergestellt werden. Sie können auch aus Balken, Stäben oder Hohlkörpem gebildet sein.

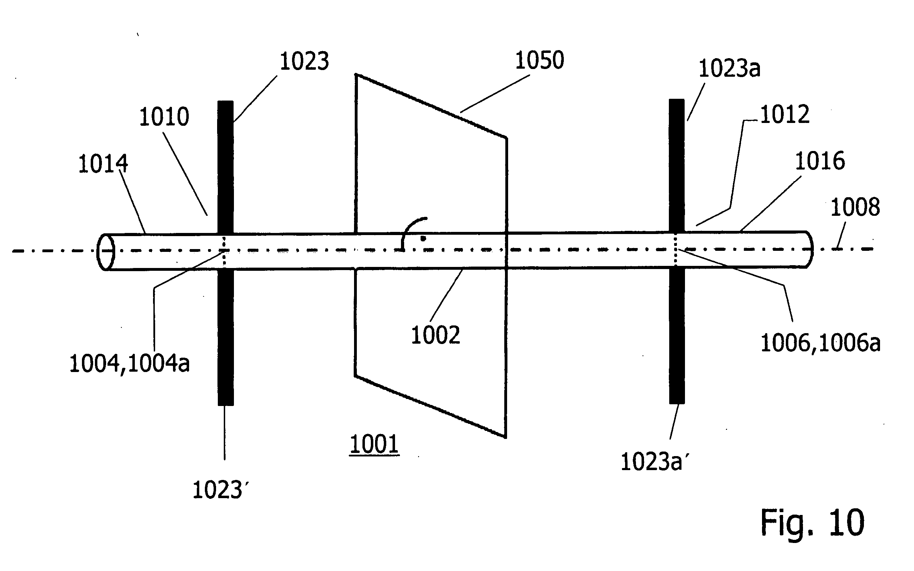

Die wohl einfachste Realisierungsform eines erfindungsgemäßen Coriolis-Massendurchflussmessgerätes stellt die Variante nach Fig. 10-dar. Sie kann als Weitere Vereinfachung der Variante nach Fig. 6 verstanden werden. Gleiche, ähnliche oder ähnlich wirkende Elemente oder Baugruppen des Beispiels nach Fig. 10 tragen die um 1000 erhöhten Bezugsziffern wie in Fig 1.

In der Variante nach Fig. 10 sind die speichenradförmigen Anbauteile auf jeweils ein einlassseitig, am Messstreckenanfang, und ein auslassseitig, am Messstreckenende, an dem Messrohr 1002 angebrachtes Paar längserstreckter Elemente 1023/1023', 1023a/1023a' reduziert. Jedes Paar längserstreckter Elemente 1023/1023', 1023a/1023a ist so angebracht, dass es eine 2-zählige Drehsymmetrie bezüglich der Zentralachse 1008 aufweist. Bezüglich der senkrecht zur Zentralachse 1008 orientierten Spiegelsymmetrieebene 1050 des Messrohres 1002 sind die Paare längserstreckter Elemente 1023/1023', 1023a/1023a' spiegelsymmetrisch angeordnet. Die Schwingungseigenschaften der Paare längserstreckter Elemente 1023/1023', 1023a/1023a' sind durch Länge, Breite, Masse und Massenverteilung innerhalb der Längserstreckten Elemente einstellbar. So könnten beispielsweise an den freien Enden der längserstreckten Elemente 1023/1023', 1023a/1023a' zusätzlich Justiermassen angebracht sein.

Die Befestigung der Paare längserstreckter Elemente 1023/1023', 1023a/1023a' auf dem Messrohr 1002 erfolgt beispielsweise durch Schweißen oder Schrauben.

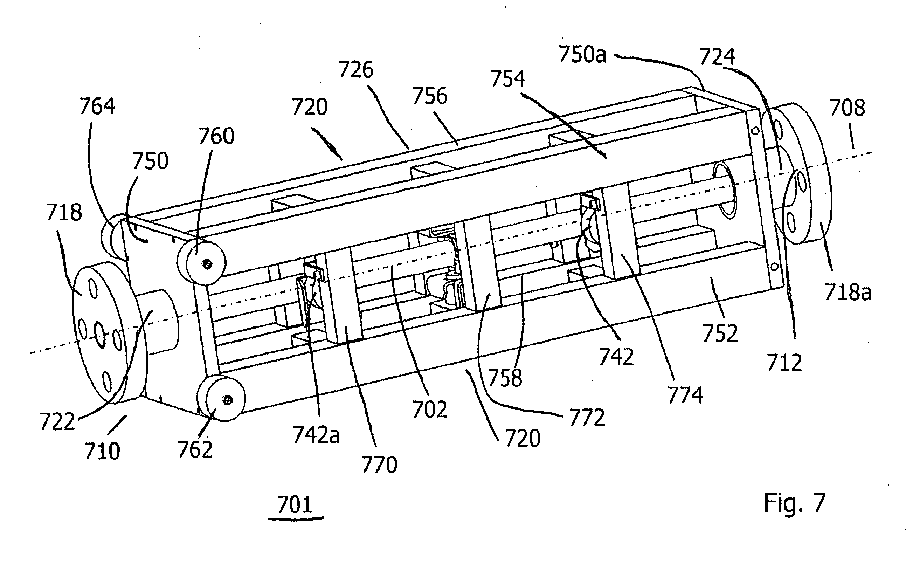

Fig. 7 zeigt eine weitere alternative Ausführungsform eines erfindungsgemäßen Massendurchflussmessgerätes 701. Gleiche, ähnliche oder ähnlich wirkende Elemente oder Baugruppen des Beispiels nach Fig. 7 tragen die um 700 erhöhten Bezugsziffern wie in Fig 1.

Fig. 7 zeigt ein Coriolis-Massendurchflussmessgerät 701 mit einem einzigen, geraden Messrohr 702. Die Zentralachse 708 des Messrohres 702 fällt hier mit der Rotationssymmetrieachse des Messrohres 702 zusammen. An den einlass- und auslassseitigen Enden 710, 712 des Messrohres 702 sind die Flansche 718, 718a zur Einbindung des Messgerätes 701 in ein Prozessrohrleitungssystem angebracht. Die Messstrecke erstreckt sich hier über die ganze Länge des Messrohres zwischen den Flanschen 718, 718a.

Mit dem Messrohr 702 ist ein bezüglich seiner Rotationssymmetrieachse 4-zählig drehsymmetrisches Anbauteil 720 verbunden, so dass das Anbauteil 720 das Messrohr und damit hier auch die Messstrecke 702 allseitig umgibt. Das Anbauteil 720 umfasst einen ersten, einlassseitigen, einen zweiten, auslassseitigen und einen dritten, mittleren Teilabschnitt 722, 724, 726 . Seine Rotationssymmetrieachse fällt mit der Zentralachse des Messrohres 702 zusammen.

Der erste, einlassseitige und der zweite, auslassseitige Teilabschnitt 722, 724 sind durch dünnwandige Hohlzylinder gebildet. Der dritte, mittlere Teilabschnitt 726 ist ein mehrteilig zusammengesetzter Körper, der 4-zählig drehsymmetrisch zur Zentralachse 708 des Messrohres ausgeführt ist. Dieser ist wie ein Quader ausgebildet, mit in etwa quadratischen Stimplatten 750, 750a und vier die Längskanten des Quaders bildenden, parallel zum Messrohr 702 verlaufenden, Verbindungselementen 752, 754, 756, 758 in der Form ebenfalls quaderförmiger Längsbalken. Die Stimplatten 750, 750a weisen zentrisch angeordnete Rundlöcher zur Durchführung des Messrohres auf. Einlass- und auslassseitig sind an den Stirnplatten 750, 750a die die ersten und zweiten Teilabschnitte bildenden Hohlzylinder 722, 724 angeschweißt, sie könnten auch angelötet oder durch eine anderweitige Verbindungstechnik verbunden sein. Die quaderförmigen Längsbalken 752, 754, 756, 758 sind an den Platten 750, 750a mechanisch befestigt, entweder geschweißt, gelötet oder verschraubt.

In der Mitte zwischen dem Einlass- und Auslassende und einlass- bzw. auslassseitig sind je zwei benachbarte Längsbalken 752, 754, 756, 758 durch senkrecht zur Längserstreckungsrichtung der Längsbalken angeordnete quaderförmige Verbindungselemente verbunden, so dass jeweils eine rahmenartige Verstrebung 772, 770, 774 entsteht, die senkrecht zur Zentralachse des Messrohres orientiert ist.

An der mittleren Verstrebung 772 ist die Erregeranordnung befestigt, an den beiden einlass - und auslassseitigen Verstrebungen sind die Sensoren zur Aufnahme des Schwingungszustandes des Rohres angebracht.

Der Durchmesser der hohlzylindrischen ersten und zweiten Teilabschnitte 722, 724 ist kleiner als die Kantenlänge der quadratischen Stirnplatten 750, 752. Die ersten und zweiten Teilabschnitte 722, 724 fungieren als Torsionsfedern, der dritte Teilabschnitt 726 fungiert als Masse. Durch die rahmenartigen Verstrebungen 772, 770, 774 wird eine erhöhte Steifigkeit des dritten Teilkörpers bei geringem Gewicht erreicht.

Die Verbindungselemente 752, 754, 756, 758 können auch als Profilschienen oder als Hohlprofilbalken ausgebildet sein.

An den einlassseitigen Ecken des mittleren Teilkörpers 726 sind zylinderförmige Körper 760, 762, 764 als Justiermassen angeschraubt. Sie werden nach der Endmontage des Messgerätes angebracht und werden nach Gewicht und Abstand von dem mittleren Teilabschnitt 726 so ausgewählt, dass die Balancierung optimiert ist. Je nach Erfordernis können an allen acht Ecken Justiermassen angebracht sein, oder nur - wie in der Fig. 7 gezeigt - an einigen der Ecken.

Die Torsionsschwingungseigenschaften des Anbauteils 720 können eingestellt werden durch die geometrischen Eigenschaften der ersten und zweiten Teilkörper 722, 724 - nämlich deren Länge, Durchmesser und Wandstärke -, durch die geometrischen Eigenschaften des mittleren Teilkörpers - insbesondere durch dessen Länge und die Kantenlänge des Quaders - und durch die Massen der Verbindungselemente 752, 754, 756, 758 sowie durch die zusätzlich angebrachten Justiermassen.

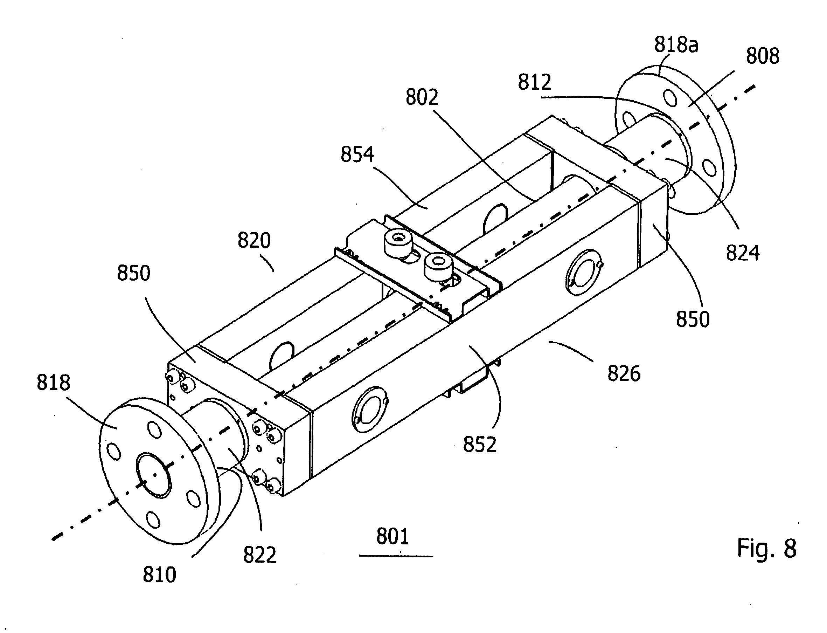

Fig. 8 zeigt eine weitere alternative Ausführungsform eines erfindungsgemäßen Massendurchflussmessgerätes 801. Gleiche, ähnliche oder ähnlich wirkende Elemente oder Baugruppen des Beispiels nach Fig. 8 tragen die um 800 erhöhten Bezugsziffem wie in Fig. 1.

Fig. 8 zeigt ein Coriolis-Massendurchflussmessgerät 801 mit einem einzigen, geraden Messrohr 802. Die Zentralachse 808 des Messrohres 802 fällt hier mit der Rotationssymmetrieachse des Messrohres 802 zusammen. An den einlass- und auslassseitigen Enden 810, 812 des Messrohres 802 sind die Flansche 818, 818a zur Einbindung des Messgerätes 801 in ein Prozessrohrleitungssystem angebracht. Die Messstrecke, also derjenige Bereich des Messrohres, indem die Wechselwirkung zwischen dem durch das Messrohr strömenden Medium und der Messrohrwand stattfindet, erstreckt sich hier über die ganze Länge des Messrohres zwischen den Flanschen 818, 818a.

Mit dem Messrohr 802 ist ein bezüglich seiner Rotationssymmetrieachse 2-zählig drehsymmetrisches Anbauteil 820 verbunden, so dass das Anbauteil 820 das Messrohr 802 allseitig umgibt. Das Anbauteil 820 umfasst einen ersten, einlassseitigen, einen zweiten, auslassseitigen und einen dritten, mittleren Teilabschnitt 822, 824, 826 . Seine Rotationssymmetrieachse fällt mit der Zentralachse des Messrohres 802 zusammen.

Der erste, einlassseitige und der zweite, auslassseitige Teilabschnitt 822, 824 sind durch dünnwandige Hohlzylinder gebildet. Der dritte, mittlere Teilabschnitt 826 ist ein mehrteilig zusammengesetzter Körper, der 2-zählich drehsymmetrisch zur Zentralachse 808 des Messrohres ausgeführt ist.

Dieser ist wie ein Quader ausgebildet, mit in etwa rechteckigen Stirnplatten 850, 850a und zwei parallel zum Messrohr 802 verlaufenden Verbindungselementen 852, 854 in der Form von längserstreckten Platten oder Hohlkörpern. Die Verbindungselemente 852, 854 sind jeweils an den Schmalseiten der Stirnplatten 850, 850a mit diesen verschraubt. Ihre Höhe entspricht der Höhe der Stirnplatten 850, 850a. Insgesamt bilden die Stirnplatten 850, 850a zusammen mit den Verbindungselementen 852, 854 einen rechteckförmigen Rahmen.

Die Stirnplatten 850, 850a weisen zentrisch angeordnete Rundlöcher zur Durchführung des Messrohres auf. Einlass- und auslassseitig sind an den Stimplatten 850, 850a die die ersten und zweiten Teilabschnitte bildenden Hohlzylinder 822, 824 angeschweißt, sie könnten auch angelötet sein.

Der Durchmesser der hohlzylindrischen ersten und zweiten Teilabschnitte 822, 824 ist kleiner als die Kantenlänge der quadratischen Stirnplatten 850, 852. Die ersten und zweiten Teilabschnitte 822, 824 fungieren als Torsionsfedern, der dritte Teilabschnitt 826 fungiert als Masse.

Die Torsionsschwingungseigenschaften des Anbauteils 820 können eingestellt werden durch die geometrischen Eigenschaften der ersten und zweiten Teilkörper 822, 824 - nämlich deren Länge, Durchmesser und Wandstärke -, durch die geometrischen Eigenschaften des mittleren Teilkörpers - insbesondere durch dessen Länge und die Kantenlängen sowie das Verhältnis von Breite zu Höhe des Quaders - und durch die Massen der Verbindungselemente 752, 754.

Insgesamt weist die Ausführungsform nach Fig. 8 eine Ähnlichkeit mit der Ausführungsform nach Fig. 7 auf. Sie ist allerdings noch einfacher zu fertigen als jene. Insbesondere wenn die Verbindungselemente 852, 854 als längserstreckte Hohlquader ausgeführt sind, kann das Anbauteil mit den für eine optimale Balancierung erforderlichen Schwingungseigenschaften und dennoch geringer Gesamtmasse aufgebaut werden.

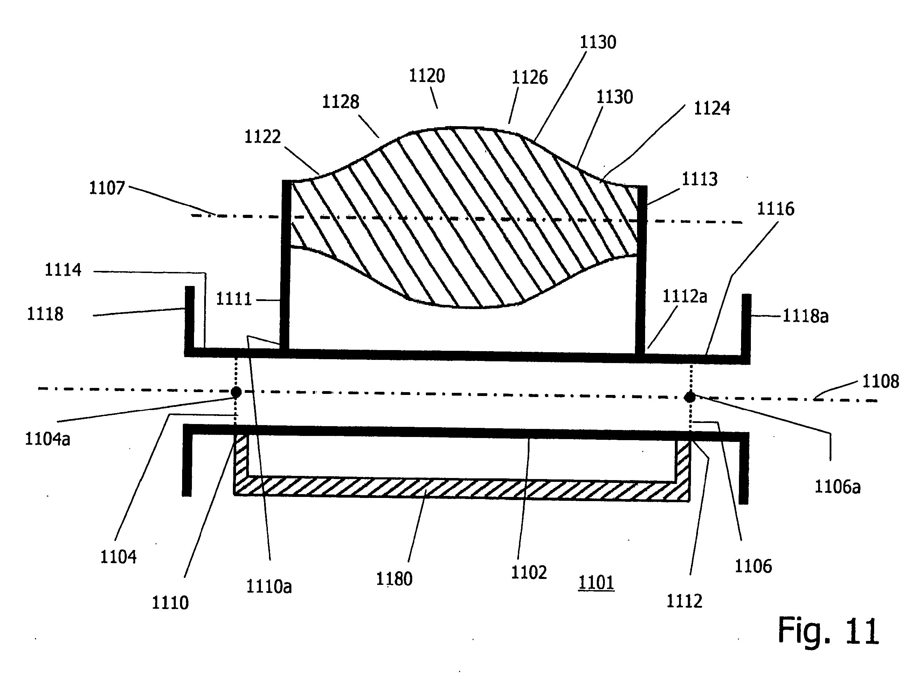

Fig. 11 zeigt eine weitere alternative Ausführungsform eines erfindungsgemäßen Massendurchflussmessgerätes 1101. Gleiche, ähnliche oder ähnlich wirkende Elemente oder Baugruppen des Beispiels nach Fig. 11 tragen die um 1100 erhöhten Bezugsziffern wie in Fig 1.

Fig. 11 zeigt ein Coriolis-Massendurchflussmessgerät 1101 mit einem einzigen, geraden Messrohr 1102. Das Messrohr 1102 ist aus einem Stück gefertigt, aber funktional in eine einlass- und eine auslassseitige Rohrverlängerung 1114, 1116 und die dazwischenliegende Messstrecke, begrenzt von einer Messstreckeneinlassquerschnittsfläche 1104 und einer Messstreckenauslassquerschnittsfläche 1106, unterteilt. Durch deren Mittelpunkte 1104a, 1106a ist eine Zentralachse 1108 des Messrohres 1102 festgelegt. Die Zentralachse 1108 fällt hier mit der Rotationssymmetrieachse des Messrohres 1102 zusammen. An den Rohrverlängerungen 1114, 1116 sind die Flansche 1118, 1118a zur Einbindung des Messgerätes 1101 in ein Prozessrohrleitungssystem angebracht.

Mit dem Messrohr 1102 ist ein Anbauteil 1120 verbunden, welches außerhalb des Messrohres 1102 angeordnet ist. Das Anbauteil 1120 ist ein rotationssymmetrischer Körper mit einem ersten, einlassseitigen, einem zweiten, auslassseitigen und einem dritten, mittleren Teilabschnitt 1122, 1124, 1126. Seine Rotationssymmetrieachse 1107 verläuft parallel zu der Zentralachse 1108 des Messrohres 1102, fällt aber nicht mit ihr zusammen sondem verläuft in einem Abstand zur Zentralachse 1108 des Messrohres 1102.

Das Anbauteil 1120 besteht aus Metall und ist beispielsweise in Gusstechnik hergestellt. Zwischen dem mittleren Teilabschnitt 1126 und den einlass- bzw. auslassseitigen Teilabschnitten 1122, 1124 sind Übergangsteile 1128, 1130 mit angeformt. Die Oberfläche des Anbauteils 1120 zeigt einen kontinuierlichen Übergang zwischen den drei Teilabschnitten mit entsprechend konkav und konvex geformten Übergangsstellen, wobei der mittlere Teilabschnitt 1126 konvex ausgebildet ist.

Eine starre Verbindung zwischen dem Messrohr 1102 und dem Anbauteil 1120 ist durch Anschweißen je einer starren Platte 1111, 1113 einlass- und auslassseitig an dem Messrohr 1102 und Anschweißen des Anbauteils 1120 an den Platten 1111, 1113 realisiert. Die Verbindungsstellen 1110a, 1112a des Anbauteils 1120 mit dem Messrohr 1102 liegen innerhalb der Messstrecke.

An dem Messrohr 1102 ist ein weiteres Kompensationsteil 1180 zur Kompensation von Biege- und/oder Torsionskräften angebracht. Das Kompensationsteil ist als exzentrischer Trog ausgebildet und mit dem Messrohr 1102 an de Ein- und Ausgang 1110, 1112 der Messstrecke befestigt, beispielsweise durch Schweißen oder Schrauben.

Der der Anordnung nach Fig. 11 zugrundeliegende Gedanke ist, dass der Teil des Messrohres, der durch das wenigstens eine Kompensationsteil in Bezug auf Biegeund/oder Torsionskräfte kompensiert ist, und der Teil, der durch das Anbauteil in Bezug auf das Torsionsmoment kompensiert ist, deckungsgleich sein können, oder einer der beiden Teile umfasst den anderen. Der jeweils größere der beiden Teile definiert die Messstrecke. Im Fall der Fig. 11 definiert der Teil, der durch das Kompensationsteil kompensiert ist, die Messstrecke.

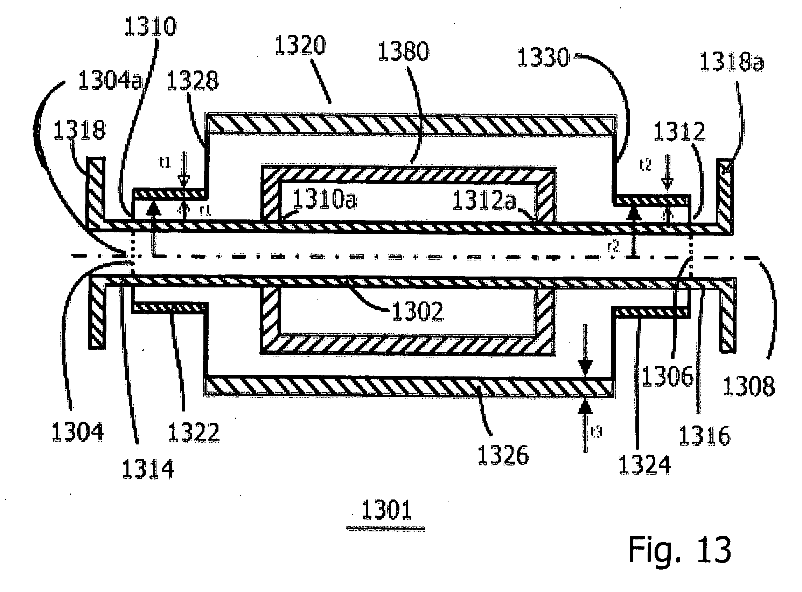

Fig. 13 zeigt eine weitere alternative Ausführungsform eines erfindungsgemäßen Massendurchflussmessgerätes 1301. Gleiche, ähnliche oder ähnlich wirkende Elemente oder Baugruppen des Beispiels nach Fig. 13 tragen die um 1300 erhöhten Bezugsziffem wie in Fig. 1.

Fig. 13 zeigt ein Coriolis-Massendurchflussmessgerät 1301 mit einem einzigen, geraden Messrohr 1302. Das Messrohr 1302 ist aus einem Stück gefertigt, aber funktional in eine einlass- und eine auslassseitige Rohrverlängerung 1314, 1316 und die dazwischenliegende Messstrecke, begrenzt von einer Messstreckeneinlassquerschnittsfläche 1304 und einer Messstreckenauslassquerschnittsfläche 1306, unterteilt. Durch deren Mittelpunkte 1304a, 13066a ist eine Zentralachse 1308 des Messrohres 1302 festgelegt. Die Zentralachse 1308 fällt hier mit der Rotationssymmetrieachse des Messrohres 1302 zusammen. An den Rohrverlängerungen 1314, 1316 sind die Flansche 1318, 1318a zur Einbindung des Messgerätes 1301 in ein Prozessrohrleitungssystem angebracht.

Mit dem Messrohr 1302 ist ein Anbauteil 1320 verbunden, welches das Messrohr 1302 im Bereich der Messstrecke allseitig umgibt. Das Anbauteil 1320 ist ein rotationssymmetrischer Hohlkörper, zusammengesetzt aus drei Hohlzylindern, die einen ersten, einlassseitigen, einen zweiten, auslassseitigen und einen dritten, mittleren Teilabschnitt 1322, 1324, 1326 des Anbauteils 1320 darstellen. Seine Rotationssymmetrieachse fällt mit der Zentralachse 1308 des Messrohres 1302 zusammen.

Die Verbindung zwischen dem mittleren Teilabschnitt 1326 und dem einlass- bzw. auslassseitigen Teilabschnitten 1322, 1324 ist an Übergangsstellen 1328, 1330 durch verschweißte Platten hergestellt. Die Innenradien r1, r2 der einlass- bzw. auslassseitigen Teilabschnitte 1322, 1324 sind kleiner als der Innenradius r3 des mittleren Teilabschnitts 1326. Die Wandstärke t3 des mittleren Teilabschnitts 1326 ist dagegen größer als die Wandstärken t1, t2 der einlass- bzw. auslassseitigen Teilabschnitte 1322, 1324.

Das Messrohr 1302 kann, wie im Stand der Technik üblich, aus Metall, beispielsweise Titan, bestehen. Auch das Anbauteil 1320 kann aus Metall bestehen. Es ist an den einlass- bzw. auslassseitigen Enden 1310, 1312 der Messstrecke an das Messrohr angeschweißt.

An dem Messrohr 1302 ist ein weiteres Kompensationsteil 1380 zur Kompensation von

Biege- und/oder Torsionskräften angebracht. Das Kompensationsteil ist als Rohr ausgebildet und mit dem Messrohr 1302 an Verbindungsstellen 1310a und 1310b befestigt, beispielsweise durch Schweißen oder Schrauben. Die Verbindungsstellen 1310a , 1312a des Kompensationsteils 1380 mit dem Messrohr 1302 liegen damit innerhalb der Messtrecke.

Der der Anordnung nach Fig. 13 zugrundeliegende Gedanke ist, dass der Teil des Messrohres, der durch das wenigstens eine Kompensationsteil in Bezug auf Biegeund/oder Torsionskräfte kompensiert ist, und der Teil, der durch das Anbauteil in Bezug auf das Torsionsmoment kompensiert ist, deckungsgleich sein können, oder einer der beiden Teile umfasst den anderen. Der jeweils größere der beiden Teile definiert die Messstrecke. Im Fall der Fig. 13 definiert der Teil, der durch das Anbauteil kompensiert ist, die Messstrecke.

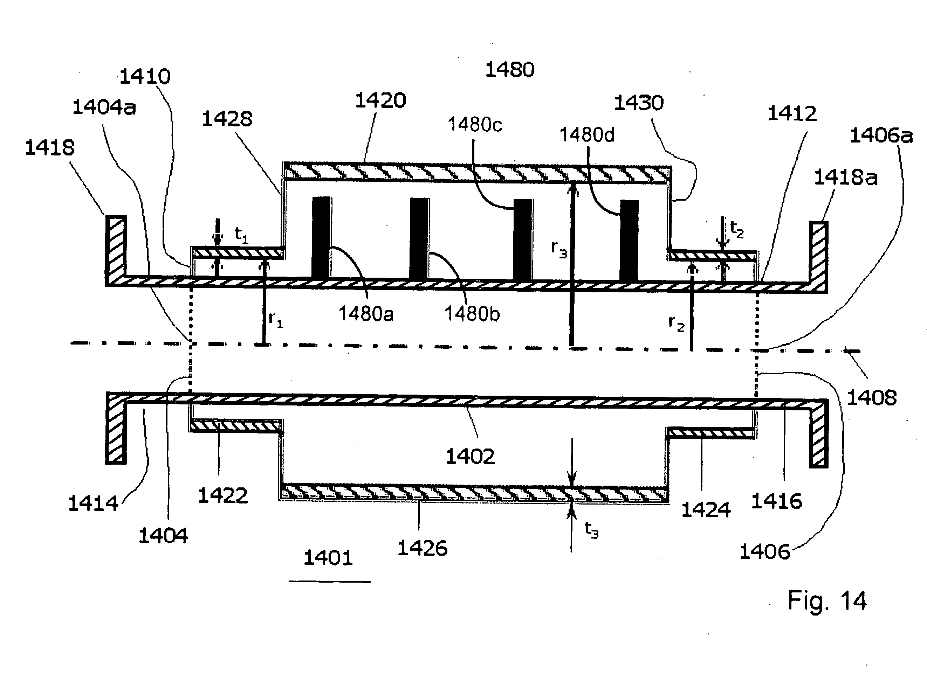

Eine weitere Ausführungsmöglichkeit hierzu zeigt Fig. 14 in dem erfindungsgemäßen Massendurchflussmessgerät 1401. Gleiche, ähnliche oder ähnlich wirkende Elemente oder Baugruppen des Beispiels nach Fig. 14 tragen die um 1400 erhöhten Bezugsziffern wie in Fig. 1.

Fig. 14 zeigt ein Coriolis-Massendurchflussmessgerät 1401 mit einem einzigen, geraden Messrohr 1402. Das Messrohr 1402 ist aus einem Stück gefertigt, aber funktional in eine einlass- und eine auslassseitige Rohrverlängerung 1414, 1416 und die dazwischenliegende Messstrecke, begrenzt von einer Messstreckeneinlassquerschnittsfläche 1404 und einer Messstreckenauslassquerschnittsfläche 1406, unterteilt. Durch deren Mittelpunkte 1404a, 1406a ist eine Zentralachse 1408 des Messrohres 1402 festgelegt. Die Zentralachse 1408 fällt hier mit der Rotationssymmetrieachse des Messrohres 1402 zusammen. An den Rohrverlängerungen 1414, 1416 sind die Flansche 1418, 1418a zur Einbindung des Messgerätes 1401 in ein Prozessrohdeitungssystem angebracht.

Mit dem Messrohr 1402 ist ein Anbauteil 1420 verbunden, welches das Messrohr 1402 im Bereich der Messstrecke allseitig umgibt. Das Anbauteil 1420 ist ein rotationssymmetrischer Hohlkörper, zusammengesetzt aus drei Hohlzylindern, die einen ersten, einlassseitigen, einen zweiten, auslassseitigen und einen dritten, mittleren Teilabschnitt 1422, 1424, 1426 des Anbauteils 1420 darstellen. Seine Rotationssymmetrieachse fällt mit der Zentralachse 1408 des Messrohres 1402 zusammen.

Die Verbindung zwischen dem mittleren Teilabschnitt 1426 und dem einlass- bzw. auslassseitigen Teilabschnitten 1422, 1424 ist an Übergangsstellen 1428, 1430 durch verschweißte Platten hergestellt. Die Innenradien r1, r2 der einlass- bzw. auslassseitigen Teilabschnitte 1422, 1424 sind kleiner als der Innenradius r3 des mittleren Teilabschnitts 1426. Die Wandstärke t3 des mittleren Teilabschnitts 1426 ist dagegen größer als die Wandstärken t1, t2 der einlass- bzw. auslassseitigen Teilabschnitte 1422, 1424.

Das Messrohr 1402 kann, wie im Stand der Technik üblich, aus Metall, beispielsweise Titan, bestehen. Auch das Anbauteil 1420 kann aus Metall bestehen. Es ist an den einlass- bzw. auslassseitigen Enden 1410, 1412 der Messstrecke an das Messrohr angeschweißt.

An dem Messrohr 1402 sind als weitere Kompensationsteile vier Platten 1480a, 1480b, 1480c, 1480d exzentrisch bezogen auf die Zentralachse 1408 an dem Messrohr angebracht. Sie bewirken auf eine früher bereits vorgeschlagene Art die Kompensation von Biege- und/oder Torsionskräften an dem Messrohr 1402. Die Platten 1480a,b,c,d sind so angeordnet, dass sie innerhalb der Messtrecke und innerhalb des mittleren Teilabschnitts 1426 des Anbauteils 1420 liegen.

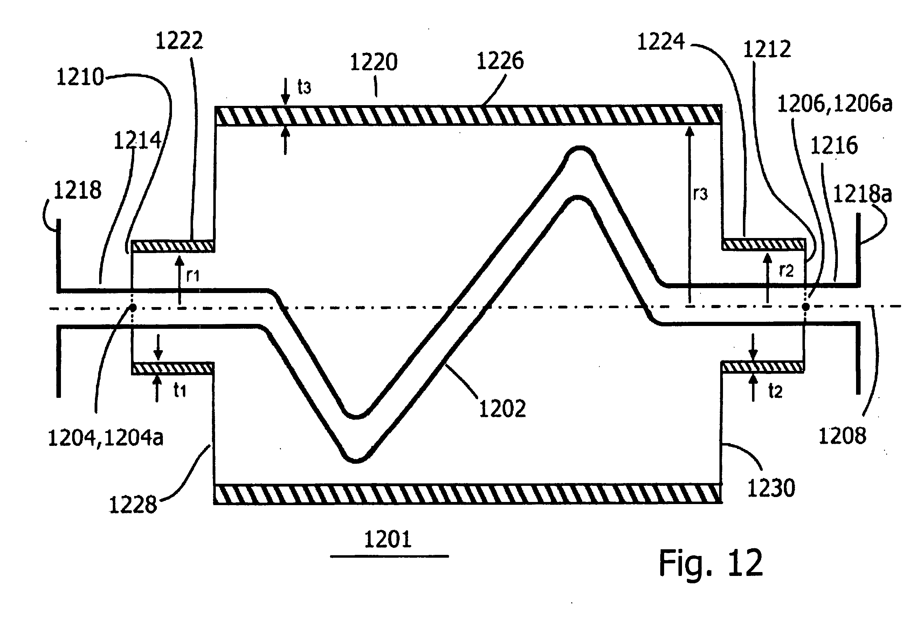

Fig. 12 zeigt eine weitere alternative Ausführungsform eines erfindungsgemäßen Massendurchflussmessgerätes 1201. Gleiche, ähnliche oder ähnlich wirkende Elemente oder Baugruppen des Beispiels nach Fig. 12 tragen die um 1200 erhöhten Bezugsziffern wie in Fig. 1.

Fig. 12 zeigt ein Coriolis-Massendurchflussmessgerät 1201 mit einem in etwa doppel-S-förmig gebogenen Messrohr 1202. Das Messrohr 1202 ist aus einem Stück gefertigt, aber funktional in eine einlass- und eine auslassseitige Rohrverlängerung 1214, 1216 und die dazwischenliegende Messstrecke, begrenzt von einer Messstreckeneinlassquerschnittsfläche 1204 und einer Messstreckenauslassquerschnittsfläche 1206, unterteilt. Durch deren Mittelpunkte 1204a, 12066a ist eine Zentralachse 1208 des Messrohres 1202 festgelegt.. An den Rohrverlängerungen 1214, 1216 sind die Flansche 1218, 1218a zur Einbindung des Messgerätes 1201 in ein Prozessrohrleitungssystem angebracht.

Mit dem Messrohr 1202 ist ein Anbauteil 1220 verbunden, welches das Messrohr 1202 im Bereich der Messstrecke allseitig umgibt. Das Anbauteil 1220 ist ein rotationssymmetrischer Hohlkörper, zusammengesetzt aus drei Hohlzylindern, die einen ersten, einlassseitigen, einen zweiten, auslassseitigen und einen dritten, mittleren Teilabschnitt 1222, 1224, 1226 des Anbauteils 1220 darstellen. Seine Rotationssymmetrieachse fällt mit der Zentralachse 1208 des Messrohres 1202 zusammen.

Die Verbindung zwischen dem mittleren Teilabschnitt 1226 und dem einlass- bzw. auslassseitigen Teilabschnitten 1222, 1224 ist an Übergangsstellen 1228, 1230 durch verschweißte Platten hergestellt. Die Innenradien r1, r2 der einlass- bzw. auslassseitigen Teilabschnitte 1222, 1224 sind kleiner als der Innenradius r3 des mittleren Teilabschnitts 1226. Die Wandstärke t3 des mittleren Teilabschnitts 1226 ist dagegen größer als die Wandstärken t1, t2 der einlass- bzw. auslassseitigen Teilabschnitte 1222, 1224.

Das Messrohr 1202 kann, wie im Stand der Technik üblich, aus Metall, beispielsweise Titan, bestehen. Auch das Anbauteil 1220 kann aus Metall bestehen. Es ist an den einlass- bzw. auslassseitigen Enden 1210, 1212 der Messstrecke an das Messrohr angeschweißt.

Die Ausführungsform nach Fig. 12 ist ein Beispiel dafür, dass die Kompensation der Torsionsmomente mittels eines erfindungsgemäßen Anbauteils auch bei komplex gebogenen Messrohren möglich ist. Das Messrohr könnte selbstverständlich auch U-förmig, V-förmig oder auch spiralförmig bebogen sein.

## Patentansprüche

1. Coriolis - Massendurchflussmessgerät (1, 1a, 301, 401, 501, 701, 801, 1101, 1201, 1301, 1401) mit einem in gekoppelten Biege- und Torsionsmoden schwingenden Messrohr (2, 202, 302, 402, 502, 702, 802, 11102, 1202, 1302, 1402), mit einem bezüglich einer Rotationssymmetrieachse drehsymmetrisch ausgebildeten, in Torsionsschwingungen gleicher Frequenz aber entgegengesetzter Phasenlage zu den Torsionsschwingungsmoden des Messrohres(2, 202, 302, 402, 502, 702, 802, 11102, 1202, 1302, 1402) versetzbaren, einlass- und auslassseitig mit dem Messrohr (2, 202, 302, 402, 502, 702, 802, 11102, 1202, 1302, 1402) mechanisch verbundenen Anbauteil (20, 220, 320, 420, 520, 720, 820, 1120, 1220, 1320, 1420), wobei die Rotationssymmetrieachse des Anbauteils (20, 220, 320, 420, 520, 720, 820, 1120, 1220, 1320, 1420) parallel zu der durch die Mittelpunkte (4a, 6a; 204a,206a; 304a,306a; 404a,406a; 504a,506a; 1104a,1106a; 1204a,1206a;1304a,1306a; 1404a,1406a) der Messstreckeneinlass- und Messstreckenauslassquerschnittsflächen (4,6; 204,206; 304,306; 404,406; 504,506; 1104,1106; 1204,1206;1304,1306; 1404,1406) festgelegten Geraden (8, 208, 308, 408, 508, 708, 808, 1108, 1208, 1308, 1408) verläuft oder mit dieser zusammenfällt **dadurch gekennzeichnet, dass** das Anbauteil (20, 220, 320, 420, 520, 720, 820, 1120, 1220, 1320, 1420) drei drehsymmetrisch bezüglich der Rotationssymmetrieachse ausgebildete Tellabschnitte (22, 24, 26; 222,224,226; 322,324,326; 422,424,426; 522,524,526; 722,724,728; 822,824,826; 1122,1124,1126; 1222,1224,1226; 1322,1324,1326; 1422,1424,1426) umfasst, derart, dass zwischen einem ersten und einem zweiten, jeweils als Torsionsfeder wirkenden, einlass- bzw. auslassseitigen Teilabschnitt (22,24; 222,224; 322,324; 422,424; 529,529a; 722,724; 822,824; 1122,1124; 1222,1224; 1322,1324; 1422,1424) ein mit diesen verbundener dritter, als träge Masse wirkender Teilabschnitt (26; 226; 326; 426; 527; 726;826;1126; 1226; 1326; 1426) angeordnet ist.

2. Coriolis-Massendurchflussmessgerät nach Anspruch 1, **dadurch gekennzeichnet, dass** das Anbauteil spiegelsymmetrisch bezüglich einer senkrecht zu der Rotationssymmetrieachse orientierten und die Zentralachse in der Mitte der Messstrecke schneidenden Symmetrieebene ist.

3. Coriolis-Massendurchflussmessgerät nach einem der vorigen Ansprüche, **dadurch gekennzeichnet, dass** wenigstens ein weiteres Kompensationsteil (1180, 1380) zur Kompensation von Biege- und/oder Torsionskräften an dem Messrohr angebracht ist.

4. Coriolis-Massendurchflussmessgerät nach einem der Ansprüche 1 bis 3, **dadurch gekennzeichnet, dass** das Anbauteil an den einlass- und auslassseitigen Messstreckenenden mit dem Messrohr verbunden ist.

5. Coriolis-Massendurchflussmessgerät nach einem der Ansprüche 1 bis 3, **dadurch gekennzeichnet, dass** das Anbauteil innerhalb der Messstrecke mit dem Messrohr verbunden ist.

6. Coriolis-Massendurchflussmessgerät nach einem der Ansprüche 4 oder 5, **dadurch gekennzeichnet, dass** das weitere Kompensationsteil (1180, 1380) innerhalb der Messstrecke an dem Messrohr angebracht ist.

7. Coriolis-Massendurchflussmessgerät nach einem der vorigen Ansprüche, **dadurch gekennzeichnet, dass** das Anbauteil das Messrohr zumindest im Bereich der Messstrecke umhüllt.

8. Coriolis- Massendurchflussmessgerät nach einem der Ansprüche 1 bis 6, **dadurch gekennzeichnet, dass** das Anbauteil außerhalb des Messrohres angeornet, aber mit diesem verbunden ist.

9. Coriolis-Massendurchflussmessgerät nach einem der vorigen Ansprüche, **dadurch gekennzeichnet, dass** das Massendurchflussmessgerät ein einziges, gerades Messrohr umfasst.

10. Coriolis-Massendurchflussmessgerät nach einem der Ansprüche 1 bis 8, **dadurch gekennzeichnet, dass** das Messrohr ein gebogenes Messrohr umfasst.

11. Coriolis-Massendurchflussmessgerät nach Anspruch 10, **dadurch gekennzeichnet, dass** das Messrohr U- oder S- oder V-förmig gebogen ist..

12. Coriolis-Massendurchflussmessgerät nach einem der vorigen Ansprüche, **dadurch gekennzeichnet, dass** die Übergänge zwischen den Teilabschnitten stufenartig ausgebildet sind.

13. Coriolis-Massendurchflussmessgerät nach einem der Ansprüche 1 bis 12, **dadurch gekennzeichnet, dass** die Übergänge zwischen den Teilabschnitten kontinuierlich ausgebildet sind.

14. Coriolis-Massendurchflussmessgerät nach einem der vorherigen Ansprüche, **dadurch gekennzeichnet, dass** das Torsionsflächenmoment des dritten, als träge Masse wirkenden Teilabschnitts betragsmäßig größer ist als die Torsionsflächenmomente der ersten und zweiten, als Drehfeder wirkenden Teilabschnitte.

15. Coriolis-Massendurchflussmessgerät nach Anspruch 14, **dadurch gekennzeichnet, dass** die Frequenz und Phasenlage der Torsionsschwingungsmode des Anbauteils durch das Verhältnis der Beträge der Torsionsflächenmomente des dritten, als träge Masse wirkenden und der ersten und zweiten, als Drehfeder wirkenden Teilabschnitte sowie durch die Lage der Übergänge zwischen den Teilabschnitten einstellbar sind.

16. Coriolis-Massendurchflussmessgerät nach einem der vorhergehenden Ansprüche, **dadurch gekennzeichnet, dass** das Anbauteil in Torsionsschwingungen gleicher Frequenz aber entgegengesetzter Phasenlage zu den Torsionsschwingungen des Messrohres versetzt ist.

17. Coriolis-Massendurchflussmessgerät nach einem der vorhergehenden Ansprüche, **dadurch gekennzeichnet, dass** wenigstens ein Teilabschnitt des Anbauteils ein Hohlkörper ist.

18. Coriolis-Massendurchflussmessgerät nach Anspruch 17, **dadurch gekennzeichnet, dass** wenigstens ein Teilabschnitt des Anbauteils ein dünnwandiger Hohlkörper ist.

19. Coriolis-Massendurchflussmessgerät nach Anspruch 18, **dadurch gekennzeichnet, dass** der dünnwandige Hohlkörper ein Hohlzylinder oder ein Hohlquader ist.

20. Coriolis-Massendurchflussmessgerät nach einem der vorhergehenden Ansprüche, **dadurch gekennzeichnet, dass** wenigstens einer der Teilabschnitte des Anbauteils ein mehrteilig zusammengesetzter Körper ist.

21. Coriolis-Massendurchflussmessgerät nach Anspruch 20, **dadurch gekennzeichnet, dass** der mehrteilig zusammengesetzte Körper parallel zur Rotationssymmetrieachse verlaufende und an senkrecht zur Messrohrachse verlaufenden Platten gehaltene, längserstreckte Bauelemente umfasst.

22. Coriolls-Massendurchflussmessgerät nach Anspruch 21, **dadurch gekennzeichnet, dass** die längserstreckten Bauelemente Profilschienen sind.

23. Coriolis-Massendurchflussmesser nach Anspruch 22, **dadurch gekennzeichnet, dass** die längserstreckten Bauelemente Hohlkörper sind.

24. Coriofis-Massendurchflussmessgerät nach einem der vorhergehenden Ansprüche, **dadurch gekennzeichnet, dass** die einlassseitigen und auslassseitigen Teilabschnitte je einen mittels radialer, längserstreckter Verbindungselemente an dem Messrohr angebrachten Kreisring und der mittlere Teilabschnitt einen steifen Verbindungskörper umfassen.

25. Coriolis-Massendurchflussmessgerät nach Anspruch 24 **dadurch gekennzeichnet, dass** der steife Verbindungskörper ein Hohlkörper ist.

26. Coriolis-Massendurchflussmessgerät nach Anspruch 25, **dadurch gekennzeichnet, dass** der Hohlkörper ein Hohlzylinder ist.

27. Corlolls-Massendurchflussmessgerät nach Anspruch 28, **dadurch gekennzeichnet, dass** der Hohlkörper ein Hohlquader ist.

28. Coriolis-Massendurchflussmessgerät nach Anspruch 24, **dadurch gekennzeichnet, dass** der steife Verbindungskörper ein mehrteilig zusammengesetzter Körper ist.

29. Coriolis-Massendurchflussmessgerät nach Anspruch 28, **dadurch gekennzeichnet, dass** der steife Verbindungskörper parallel zur Rotationssymmetrieachse verlaufende längserstreckte Bauelemente umfasst.

30. Coriolis-Massendurchflussmessgerät nach Anspruch 29, **dadurch gekennzeichnet, dass** die längserstreckten Bauelemente Profilschienen oder Balken oder Stäbe sind.

31. Coriolis-Massendurchfiussmessgerät nach Anspruch 29, **dadurch gekennzeichnet, dass** die längserstreckten Bauelemente Hohlkörper sind.

32. Coriolis-Massendurchflussmessgerät nach einem der Ansprüche 24 bis 31, **dadurch gekennzeichnet, dass** die Torsionsschwingungseigenschaften des Anbauteils über die Dimensionierung der längserstreckten Verbindungselemente einstellbar sind.

33. Coriolis-Massendurchflussmessgerät nach einem der vorhergehenden Ansprüche, **dadurch gekennzeichnet, dass** die Erregeranordnung an dem Anbauteil angebracht ist.

34. Coriolis-Massendurohflussmessgerät nach einem der vorhergehenden Ansprüche, **dadurch gekennzeichnet, dass** Sensoren zur Schwingungserfassung an dem Anbauteil angebracht sind.

35. Corlolis-Massendurchflussmessgerät nach einem der vorhergehenden Ansprüche, **dadurch gekennzeichnet, dass** an dem Anbauteil Justierelemente zur nachträglichen Trimmung angebracht sind.

36. Coriolis-Massendurchflussmessgerät nach einem der vorigen Ansprüche, **dadurch gekennzeichnet, dass** das Anbauteil (520) je eine erste, einlassseitig und eine zweite, auslassseitig an dem Messrohr angebrachte starre Platte (522, 524) umfasst, die mittels eines tordierbaren Verbindungskörpers (526) miteinander verbunden sind.

37. Coriolis-Massendurchflussmessgerät nach Anspruch 36, **dadurch gekennzeichnet, dass** der tordierbare Verbindungskörper (526) ein Hohlkörper ist.

38. Coriolis-Massendurchflussmessgerät nach Anspruch 37, **dadurch gekennzeichnet, dass** der Hohlkörper ein Hohlzylinder oder ein Hohlquader ist.

39. Coriolis-Massendurchflussmessgerät nach Anspruch 36, **dadurch gekennzeichnet, dass** der tordierbare Verbindungskörper (526) ein mehrteilig zusammengesetzter Körper ist.

40. Coriolis-Massendurchflussmessgerät nach Anspruch 39, **dadurch gekennzeichnet, dass** der tordierbare Verbindungskörper aus parallel zur Messrohrachse verlaufenden längserstreckten Bauelementen gebildet ist.

41. Coriolis-Massendurchflussmessgerät nach Anspruch 40, **dadurch gekennzeichnet, dass** die längserstreckten Bauelemente Profilschienen oder Balken oder Stäbe sind.

42. Coriolis-Massendurchflussmessgerät nach Anspruch 41, **dadurch gekennzeichnet, dass** die längserstreckten Bauelemente Hohlkörper sind.

## Claims

1. Coriolis mass flow measuring device (1, 1a, 301, 401, 501, 701, 801, 1101, 1201, 1301, 1401) comprising a measurement tube vibrating in coupled bending and torsion modes (2, 202, 302, 402, 502, 702, 802, 11102, 1202, 1302, 1402), with a mechanically connected attachment (20, 220, 320, 420, 520, 720, 1120, 1220, 1320, 1420) which is made rotationally symmetrical in respect of a rotationally symmetrical axis, which can be induced to vibrate with torsion vibrations of the same frequency but with an opposite phase position to the torsion vibration modes of the measurement tube (2, 202, 302, 402, 502, 702, 802, 11102, 1202, 1302, 1402), with the inlet side and the outlet side of the measurement tube (2, 202, 302, 402, 502, 702, 802, 11102, 1202, 1302, 1402), whereby the rotationally symmetrical axis of the attachment (20, 220, 320, 420, 520, 720, 1120, 1220, 1320, 1420) runs parallel to the established straight lines (8, 208, 308, 408, 508, 708, 808, 1108, 1208, 1308, 1408) through the middle points (4a, 6a; 204a, 206a; 304a, 306a; 404a, 406a; 504a, 506a; 1104a, 1106a; 1204a, 1206a; 1304a, 1306a; 1404a, 1406a) of the measuring section inlet and measuring section outlet cross-sectional areas (4, 6; 204, 206; 304, 306; 404, 406; 504, 506; 1104, 1106; 1204, 1206; 1304, 1306; 1404, 1406) or coincides with these, **characterised by** the attachment (20, 220, 320, 420, 520, 720, 1120, 1220, 1320, 1420) being comprised of three sub-sections (22, 24, 26; 222, 224, 226; 322, 324, 326; 422, 424, 426; 522, 524, 526; 722, 724, 726; 822, 824, 826; 1122, 1124, 1126; 1322, 1324, 1326; 1422, 1424, 1426) designed to be rotationally symmetrical with respect to the rotationally symmetrical axis, in such a way that there is a third sub-section (26; 226; 326; 426; 527; 726; 826; 1126; 1226; 1326; 1426) acting as an inertial mass located between and connected to a first and a second acting sub-section on the inlet and outlet side (22, 24; 222, 224; 322, 324; 422, 424; 522, 529, 529a; 722, 724; 822, 824; 1122, 1124; 1322, 1324; 1422, 1424) which each act as a torsion spring.

2. A Coriolis mass flow measuring device according to Claim 1 **characterised by** the attachment being mirror-symmetrical relative to a merging symmetrical plane which is orientated vertically to the rotationally symmetrical axis and the central axis in the middle of the measuring section.

3. A Coriolis mass flow measuring device according to one of the above claims **characterised by** at least one further compensation piece (1180, 1380) is attached to compensate for bending and/or torsional forces on the measuring tube.

4. A Coriolis mass flow measuring device according to one of the claims 1 to 3 **characterised by** the attachment being connected with the measuring tube at the ends of the measuring section on the inlet and the outlet side.

5. A Coriolis mass flow measuring device according to one of the claims 1 to 3 **characterised by** the attachment being connected within the measuring section to the measuring tube.

6. A Coriolis mass flow measuring device according to one of the claims 4 to 5 **characterised by** the further compensation piece (1180, 1380) being attached to the measuring tube inside the measuring section.

7. A Coriolis mass flow measuring device according to one of the above claims **characterised by** the attachment surrounding the measuring tube at least in the area of the measuring section.

8. A Coriolis mass flow measuring device according to one of the claims 1 to 6 **characterised by** the attachment being located outside of the measuring tube but being attached to it.

9. A Coriolis mass flow measuring device according to one of the above claims **characterised by** the mass flow measuring device being comprised of a single straight measuring tube.

10. A Coriolis mass flow measuring device according to one of the claims 1 to 8 **characterised by** the measuring tube being comprised of a bent measuring tube.

11. A Coriolis mass flow measuring device according to one Claim 10 **characterised by** the measuring pipe being bent into a U, S or V form

12. A Coriolis mass flow measuring device according to one of the preceeding claims **characterised by** the cross-overs between the sub-sections being designed step like.

13. A Coriolis mass flow measuring device according to one of the claims 1 to 12 **characterised by** the cross-overs between the sub-sections being designed as a continuous.

14. A Coriolis mass flow measuring device according to one of the above claims **characterised by** the torsion area torque of the third sub-section, which acts as an inertial mass, being larger than the torsion area torque of the first and second sub-section which act as a torsional spring.

15. A Coriolis mass flow measuring device according to Claim 14 **characterised by** the frequency and phase length of the torsion vibration mode of the attachment being adjustable based on the ratio of the torsion surface torques of the third sub-section, which acts as an inertial mass, and the first and second sub-section which act as a torsional spring, as well as the location of the cross-overs between the sub-sections.

16. A Coriolis mass flow measuring device according to one of the above claims **characterised by** the attachment being induced to vibrate with torsion vibrations of the same frequency but with an opposite phase position to the torsion vibration modes of the measurement tube.

17. A Coriolis mass flow measuring device according to one of the above claims **characterised by** at least one sub-section of the attachment being a hollow body.

18. A Coriolis mass flow measuring device according to Claim 17 **characterised by** at least one sub-section of the attachment being a thin-walled hollow body.

19. A Coriolis mass flow measuring device according to Claim 18 **characterised by** the thin-walled hollow body being a hollow cylinder or a hollow cuboid.

20. A Coriolis mass flow measuring device according to one of the above claims **characterised by** at least one of the sub-sections of the attachment being a multi-part assembled body.

21. A Coriolis mass flow measuring device according to Claim 20 **characterised by** the multi-part assembled body comprising held building elements extending lengthwise running parallel to the rotationally symmetrical axis and perpendicular to the plates running along the axis of the measuring tube.

22. A Coriolis mass flow measuring device according to Claim 21 **characterised by** the building elements extending lengthwise being profiled rails.

23. A Coriolis mass flow measuring device according to Claim 22 **characterised by** the building elements extending lengthwise being a hollow body.

24. A Coriolis mass flow measuring device according to one of the above claims **characterised by** the sub-sections on the inlet side and the outlet side comprising a circular ring each attached to the measuring pipe by radial, connecting elements extending lengthwise and the middle sub-section is a rigid connecting piece.

25. A Coriolis mass flow measuring device according to Claim 24 **characterised by** the rigid connecting piece being a hollow body.

26. A Coriolis mass flow measuring device according to Claim 25 **characterised by** the hollow body being a hollow cylinder.

27. A Coriolis mass flow measuring device according to Claim 28 **characterised by** the hollow body being a hollow cuboid.

28. A Coriolis mass flow measuring device according to Claim 24 **characterised by** the rigid connecting piece being a multi-part assembled body.

29. A Coriolis mass flow measuring device according to Claim 28 **characterised by** the rigid connecting piece comprising construction elements extending lengthwise running parallel to the rotationally symmetrical axis.

30. A Coriolis mass flow measuring device according to Claim 29 **characterised by** the construction elements extending lengthwise being comprised of profiled rails or beams or rods.

31. A Coriolis mass flow measuring device according to Claim 29 **characterised by** the construction elements extending lengthwise being hollow bodies.

32. A Coriolis mass flow measuring device according to one of claims 24 to 31 **characterised by** the torsion vibration properties of the attachment being adjustable over dimensioning of the connecting elements extending lengthwise.

33. A Coriolis mass flow measuring device according to one of the above claims **characterised by** the exciter arrangement being attached to the attachment.

34. A Coriolis mass flow measuring device according to one of the above claims **characterised by** the sensors for detecting vibrations being attached to the attachment.

35. A Coriolis mass flow measuring device according to one of the above claims **characterised by** adjusting elements being attached to the attachment for retrospective trimming.

36. A Coriolis mass flow measuring device according to one of the above claims **characterised by** the attachment (520) comprising a first rigid plate (522, 524) attached to the inlet side of the measuring pipe and a second rigid plate attached to the outlet side of the measuring pipe, which are connected together by means of a twistable connecting body (526).

37. A Coriolis mass flow measuring device according to Claim 36 **characterised by** the twistable connecting body (526) being a hollow body.

38. A Coriolis mass flow measuring device according to Claim 37 **characterised by** the hollow body being a hollow cylinder or a hollow cuboid.

39. A Coriolis mass flow measuring device according to Claim 36 **characterised by** the twistable connecting body (526) being a multi-part assembled body.

40. A Coriolis mass flow measuring device according to Claim 39 **characterised by** the twistable connecting body being made up of construction elements extending lengthwise parallel to the measuring pipe axis.

41. A Coriolis mass flow measuring device according to Claim 40 **characterised by** the construction elements extending lengthwise being profiled rails or beams or rods.

42. A Coriolis mass flow measuring device according to Claim 41 **characterised by** the construction elements extending lengthwise being a hollow body.

## Revendications

1. Débitmètre massique Coriolis (1, 1a, 301, 401, 501, 701, 801, 1101, 5 1201, 301, 1401) comportant un tube de mesurage oscillant selon des modes de flexion et de torsion couplés (2, 202, 302, 402, 502, 702, 802, 11102, 1202, 1302, 1402), avec une pièce rapportée reliée mécaniquement du côté de l'entrée et du côté de la sortie, configurée comme ayant une symétrie de révolution par rapport à un axe à symétrie de rotation, décalable en oscillations de torsion de la même fréquence, mais en position de phase opposée par rapport aux modes d'oscillations de torsion du tube de mesurage (2, 202, 302, 402, 1320, 1420), sachant que l'axe à symétrie de révolution de la pièce rapportée (20, 220, 320, 420, 520, 720, 820, 1120, 1220, 1320, 1420) est orienté parallèlement aux lignes droites (8, 208, 308, 408, 508, 708, 808,1108,1208,1308,1408) déterminées par rapport aux points centraux (4a, 6a; 204a, 206a; 304a, 306a; 404a, 406a; 504a, 506a; 1104a, 1106a; 1204a, 1206a; 1304a, 1306a; 14042, 1406a) des surfaces transversales d'entrée et de sortie de la section de mesurage (4,6; 204,206; 304,306; 404,406; 504,506; 1104,1106; 1204, 1206; 1304, 1306; 1404, 1406), ou coïncidant avec ces lignes droites, **caractérisé en ce que** la pièce rapportée (20, 220, 320, 420, 520, 720, 820, 1120, 1220, 1320, 420) comprend trois sous-sections configurées avec une symétrie de révolution par rapport à l'axe de symétrie de rotation (22, 24, 26; 222, 224, 225; 322, 324, 326; 422, 424, 426 ; 522, 524, 26; 722, 724, 728; 822, 824,8 26; 1122, 1124, 1126; 1222, 1224, 1226; 1322, 1324, 1326; 1422, 1424, 1426), de telle manière qu'entre une première et une deuxième sous-section agissant chacune comme ressort de torsion du côté d'entrée ou du côté de sortie (22, 24; 222, 224; 322, 324; 422, 424; 529, 529a; 722, 724; 822. 824; 1122, 1124; 1222, 1224; 1322, 1324; 1422, 1424) est installée une troisième sous-section (26; 226; 326; 426; 527; 726;826;1126; 1226; 1326; 1426) reliée à ces sous-sections et agissant en tant que masse inerte.

2. Débitmètre massique Coriolis selon la revendication 1, **caractérisé en ce que** la pièce rapportée est symétrique en miroir par rapport à un plan de symétrie orienté verticalement par rapport à l'axe de symétrie de révolution et coupant l'axe central au milieu de la section de mesure.

3. Débitmètre massique Coriolis selon l'une des revendications qui précèdent, **caractérisé en ce qu'**au moins une pièce de compensation supplémentaire (1180, 1380) est fixée sur le tube de mesurage pour la compensation des forces de flexion et/ou de torsion.

4. Débitmètre massique Coriolis selon l'une des revendications 1 à 3, **caractérisé en ce que** la pièce rapportée est reliée au tube de mesurage aux extrémités d'entrée et de sortie de la section de mesure.

5. Débitmètre massique Coriolis selon l'une des revendications 1 à 3, **caractérisé en ce que** la pièce rapportée est reliée au tube de mesurage à l'intérieur de la section de mesure.

6. Débitmètre massique Coriolis selon l'une des revendications 4 ou 5, **caractérisé en ce que** la pièce de compensation supplémentaire (1180, 1380) est fixée au tube de mesurage à l'intérieur de la section de mesure.

7. Débitmètre massique Coriolis selon l'une des revendications qui précèdent, **caractérisé en ce que** la pièce rapportée enveloppe le tube de mesurage au moins dans la zone de la section de mesure.

8. Débitmètre massique Coriolis selon l'une des revendications 1 à 6, **caractérisé en ce que** la pièce rapportée est installée à l'extérieur du tube de mesurage, mais reliée à celui-ci.

9. Débitmètre massique Coriolis selon l'une des revendications qui précèdent, **caractérisé en ce que** le débitmètre massique englobe un seul tube de mesurage rectiligne.

10. Débitmètre massique Coriolis selon l'une des revendications 1 à 8, **caractérisé en ce que** le tube de mesurage englobe un tube de mesurage coudé.

11. Débitmètre massique Coriolis selon la revendication 10, **caractérisé en ce que** le tube de mesurage est coudé en forme de U, de S ou de V.

12. Débitmètre massique Coriolis selon l'une des revendications qui précèdent, **caractérisé en ce que** les transitions entre les sous-sections sont configurées en forme de marches d'escalier.

13. Débitmètre massique Coriolis selon l'une des revendications 1 à 12, **caractérisé en ce que** les transitions entre les sous-sections sont configurées en continu.

14. Débitmètre massique Coriolis selon l'une des revendications qui précèdent, **caractérisé en ce que** le couple de surface de torsion de la troisième sous-section agissant comme masse inerte a une valeur plus grande que les couples de surface de torsion des première et deuxième sous-sections agissant comme ressort de rotation.

15. Débitmètre massique Coriolis selon la revendication 14, **caractérisé en ce que** la fréquence et la position de phase des modes d'oscillations de torsion de la pièce rapportée peuvent être réglées en fonction de la relation entre les valeurs de couples de surface de torsion de la troisième sous-section agissant comme masse inerte et les valeurs de couples de surface de torsion des première et deuxième sous-sections agissant comme ressort de rotation, ainsi que par rapport à la position des transitions entre ces sous-sections.

16. Débitmètre massique Coriolis selon l'une des revendications qui précèdent, **caractérisé en ce que** la pièce rapportée est décalée en oscillations de torsion de la même fréquence, mais en position de phase opposée par rapport aux modes d'oscillations de torsion du tube de mesurage.

17. Débitmètre massique Coriolis selon l'une des revendications qui précèdent,
**caractérisé en ce qu'**au moins une sous-section du corps rapporté est un corps creux.

18. Débitmètre massique Coriolis selon la revendication 17, **caractérisé en ce qu'**au moins une sous-section de la pièce rapportée est un corps creux à parois minces.

19. Débitmètre massique Coriolis selon la revendication 18, **caractérisé en ce que** le corps creux à parois minces est un cylindre creux ou un parallélépipède creux.

20. Débitmètre massique Coriolis selon l'une des revendications qui précèdent, **caractérisé en ce qu'**au moins l'une des sous-sections de la pièce rapportée est un corps constitué par plusieurs parties.

21. Débitmètre massique Coriolis selon la revendication 20, **caractérisé en ce que** le corps constitué par plusieurs parties comprend des éléments de construction trempés, qui s'étendent longitudinalement parallèlement à l'axe à symétrie de révolution et à des plaques posées verticalement par rapport à l'axe du tube de mesurage.

22. Débitmètre massique Coriolis selon la revendication 21, **caractérisé en ce que** les éléments de construction qui s'étendent longitudinalement sont des rails profilés.

23. Débitmètre massique Coriolis selon la revendication 22, **caractérisé en ce que** les éléments de construction qui s'étendent longitudinalement sont des corps creux.

24. Débitmètre massique Coriolis selon l'une des revendications qui précèdent, **caractérisé en ce que** les sous-sections du côté de l'entrée et celles du côté de la sortie comprennent chacune une couronne circulaire fixée par le biais d'éléments de liaison radiaux qui s'étendent longitudinalement sur le tube de mesurage et de la sous-section centrale d'un corps de liaison rigide.

25. Débitmètre massique Coriolis selon la revendication 24, **caractérisé en ce que** le corps de liaison rigide est un corps creux.

26. Débitmètre massique Coriolis selon la revendication 25, **caractérisé en ce que** le corps creux est un cylindre creux.

27. Débitmètre massique Coriolis selon la revendication 28, **caractérisé en ce que** le corps creux est un parallélépipède creux.

28. Débitmètre massique Coriolis selon la revendication 24, **caractérisé en ce que** le corps de liaison rigide est un corps constitué par plusieurs pièces.

29. Débitmètre massique Coriolis selon la revendication 28, **caractérisé en ce que** le corps de liaison rigide englobe l'élément de liaison qui s'étendent longitudinalement, parallèlement à l'axe à symétrie de révolution.

30. Débitmètre massique Coriolis selon la revendication 29, **caractérisé en ce que** les éléments de construction qui s'étendent longitudinalement sont des rails profils, des poutres ou des tiges.

31. Débitmètre massique Coriolis selon la revendication 29, **caractérisé en ce que** les éléments de construction qui s'étendent longitudinalement sont des corps creux.

32. Débitmètre massique Coriolis selon l'une des revendications 24 à 31, **caractérisé en ce que** les caractéristiques d'oscillation de torsion de la pièce rapportée peuvent être réglées par le dimensionnement des éléments de liaison s'étendant en longueur.

33. Débitmètre massique Coriolis selon l'une des revendications qui précèdent, **caractérisé en ce que** le dispositif d'excitateur est fixé sur la pièce rapportée.

34. Débitmètre massique Coriolis selon l'une des revendications qui précèdent, **caractérisé en ce que** des capteurs sont fixés sur la pièce rapportée en vue de la détection des oscillations.

35. Débitmètre massique Coriolis selon l'une des revendications qui précèdent, **caractérisé en ce que** des éléments d'ajustement pour la compensation a posteriori sont fixés sur la pièce rapportée.

36. Débitmètre massique Coriolis selon l'une des revendications qui précèdent, **caractérisé en ce que** la pièce rapportée (520) englobe à la fois une première plaque rigide placée sur le côté de l'entrée et une deuxième plaque rigide placée du côté de la sortie, sur le tube de mesurage (522, 524), qui sont reliées ensemble par un corps de liaison pouvant être tordu (526) .

37. Débitmètre massique Coriolis selon la revendication 36, **caractérisé en ce que** le corps de liaison pouvant être tordu (526) est un corps creux.

38. Débitmètre massique Coriolis selon la revendication 37, **caractérisé en ce que** le corps creux est un cylindre creux ou un parallélépipède creux.

39. Débitmètre massique Coriolis selon la revendication 36, **caractérisé en ce que** le corps de liaison pouvant être tordu (526) est un corps constitué par plusieurs parties

40. Débitmètre massique Coriolis selon la revendication 39, **caractérisé en ce que** le corps de liaison pouvant être tordus est constitué par des éléments de construction qui s'étendent longitudinalement et placés parallèlement à l'axe du tube de mesurage.

41. Débitmètre massique Coriolis selon la revendication 40, **caractérisé en ce que** les éléments de construction qui s'étendent longitudinalement sont des rails profils, des poutres ou des tiges.

42. Débitmètre massique Coriolis selon la revendication 41, **caractérisé en ce que** les éléments de construction qui s'étendent longitudinalement sont des corps creux.
